(19) Europäisches Patentamt / European Patent Office / Office européen des brevets

(11) **EP 4 641 516 A1**

(12) **EUROPEAN PATENT APPLICATION**

(43) Date of publication:
**29.10.2025 Bulletin 2025/44**

(21) Application number: **25172564.4**

(22) Date of filing: **25.04.2025**

(51) International Patent Classification (IPC):
**G06V 10/62** (2022.01) **G06T 7/20** (2017.01)

(52) Cooperative Patent Classification (CPC):
**B60L 50/64; G06T 7/246; G06V 10/62;
H01M 50/204; H01M 50/209; H01M 50/258;
H01M 50/507; H01M 50/509;** G06T 7/20;
G06T 2207/10016; G06T 2207/20081;
G06V 10/774; G06V 10/7753; H01M 2220/20;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.04.2024 US 202463639427 P**

(71) Applicant: **ATS CORPORATION
Cambridge, Ontario N3H 4R7 (CA)**

(72) Inventors:
• **KLEINIKKINK, Stanley Wellington
Cambridge (CA)**

• **DRAGAN, Paul
Cambridge (CA)**
• **AIKENS, Stephen Fisher
Cambridge (CA)**
• **YANG, Adam Srebrnjak
Cambridge (CA)**
• **KHANNA, Dheeraj
Cambridge (CA)**
• **ZELEK, John
Cambridge (CA)**

(74) Representative: **Noble, Nicholas et al
Kilburn & Strode LLP
Lacon London
84 Theobalds Road
London WC1X 8NL (GB)**

(54) **SYSTEMS AND METHODS FOR ANNOTATING AND TRACKING OBJECTS IN A VIDEO**

(57) Systems and methods for annotating and tracking objects in a video are described herein. The methods include operating at least one processor to: receive, from at least one image device proximal to the manufacturing device, a sequence of frames of a video showing the plurality of parts within the manufacturing device; receive at least one annotated frame having labelling of a subset of parts of the plurality of parts in a plurality of frames of the video, the annotated frame being video annotation data; apply the video annotation data as input to a propagation algorithm to annotate an additional subset of parts of the plurality of parts within the frames of the video, the additional annotated frames being additional video annotation data; apply a segmentation model to the additional video annotation data to generate image segmentation masks of each of the parts, the image segmentation masks being trained segmentation model output data; and apply an object detection model to the trained segmentation model output tracking data to get a fine-tuned object detection model to detect and track the parts.

FIG. 4A

EP 4 641 516 A1

412 414

From
Fig. 4A

Propagated BBox

Segment Anything

422

YOLO-v8
Training

To
Fig. 4C

416

Segmentation Masks from BBox

418

420

BBox Fitted with SAM

Segmentation & Bounding Box Resizing

Model Training

FIG.    4B

**Description**

**RELATED APPLICATIONS**

The current application claims priority to previously filed US Provisional Patent Application Serial No. 63/369,427 filed April 26, 2024 and entitled "Systems and Methods for Annotating and Tracking Objects in a Video," the entire contents of which are incorporated herein by reference for all purposes.

**TECHNICAL FIELD**

The described embodiments generally relate to systems and methods for object tracking, and more specifically to systems and methods for annotating and tracking objects in a video.

**BACKGROUND**

Most learning-based computer vision tasks and algorithms utilize a labelled dataset to complete a desired task. When the dataset is a video, picture annotation is a very important task for preparing training data. Typically, lots of manually-annotated pictures are required for use as an initial training data set for further data processing and data mining of machine learning and computer vision.

Unfortunately, manually annotating pictures is an inefficient task, particularly when the annotator needs to observe pictures and identify many different objects in the picture.

This can be particularly relevant in manufacturing processes (e.g., assembling, fabricating, treating, refining, etc.) that use video data to for assessment. For example, in many manufacturing processes, it is common for many different parts to be transported along manufacturing devices synchronously. Parts that are not similar may produce an unacceptable product, thus resulting in overall production losses. Parts that are transported asynchronously can inhibit or delay the subsequent production station, also resulting in overall production losses.

One specific example of a manufacturing process where computer vision may be able to help reduce productions losses are bowl feeders. Bowl feeders are often used to feed individual parts to manufacturing lines. Bowl feeders can receive a randomly sorted bulk package of parts and feed the parts to a manufacturing line one-by-one and can also adjust the parts to have a particular orientation, if desired. Downtime to the bowl feeder, however, can result in significant overall production losses.

Computer vision offers tremendous potential for reducing downtime of bowl feeders; however, its use in such an application is difficult given the need to annotate a large amount of video data for use in training the vision system. The annotation may be particularly arduous since the objects to be annotated are typically densely populated in the video and so require great attention to proper label.

Therefore, there is a need for systems and methods for annotating and tracking objects in a video.

**SUMMARY**

The following introduction is provided to introduce the reader to the more detailed discussion to follow. The introduction is not intended to limit or define any claimed or as yet unclaimed invention. One or more inventions may reside in any combination or subcombination of the elements or process steps disclosed in any part of this document including its claims and figures.

In accordance with the present disclosure there is provided a method of tracking a parts in a video, the method comprising: receiving, from at least one imaging device proximal to a manufacturing device, a sequence of frames of a training video showing a plurality of parts within the manufacturing device; receiving an annotated frame from the sequence of frames of the video labelling one or more parts present in the annotated frame; generating a plurality of annotated frames using a point propagation algorithm to propagate the labelled one or more parts in the annotated frame across the sequence of frames; training an object detection model using the plurality of annotated frames; and applying the trained object detection model to a received video showing the plurality of parts within the manufacturing device to detect and track the parts.

In a further embodiment of the method, the propagation algorithm is a point track algorithm.

In a further embodiment of the method, the one or more parts in the annotated frame comprise a bounding box.

In a further embodiment of the method, generating the plurality of annotated frames comprises resizing the bounding boxes in the plurality of annotated frames.

In a further embodiment of the method, resizing the bounding boxes in the plurality of annotated frames comprises segmenting labelled objects, using a segmentation model, in each of the annotated frames and generating bounding boxes based on the segmented labelled objects.

In a further embodiment of the method, the segmentation model is a segment anything model (SAM).

In a further embodiment of the method, the video comprises parts moving within a manufacturing device.

In a further embodiment of the method, the manufacturing device is a bowl feeder.

In a further embodiment of the method, the method further comprises determining a velocity of one or more of the parts based on tracking of the parts.

In a further embodiment of the method, the method further comprises generating bowl feeder control settings by applying a flow velocity of the parts to a predictive model.

In a further embodiment of the method, the method further comprises automatically applying the bowl feeder control settings to the bowl feeder.

In a further embodiment of the method, the method further comprises calculating one or more performance parameters based on the detected and tracked parts.

In a further embodiment of the method, the one or more performance parameters are used to determine one or more actions to perform, the one or more actions comprises one or more of: controlling one or more components of automation equipment; providing one or more suggested changes to components of the automation equipment; providing the one or more actions to perform to user interface functionality; providing the one or performance parameters to perform to user interface functionality; providing the one or more actions to perform to one or more software processes; and providing the one or performance parameters to perform to the one or more software processes.

In accordance with the present disclosure there is further provided a system comprising: a manufacturing device; at least one imaging device capturing images of at least a portion of the manufacturing device; and at least one controller configured to perform a method comprising: receiving, from the at least one imaging device proximal to the manufacturing device, a sequence of frames of a training video showing a plurality of parts within the manufacturing device; receiving an annotated frame from the sequence of frames of the video labelling one or more parts present in the annotated frame; generating a plurality of annotated frames using a point propagation algorithm to propagate the labelled one or more parts in the annotated frame across the sequence of frames; training an object detection model using the plurality of annotated frames; and applying the trained object detection model to a received video showing the plurality of parts within the manufacturing device to detect and track the parts.

In a further embodiment of the system, the propagation algorithm is a point track algorithm.

In a further embodiment of the system, the one or more parts in the annotated frame comprise a bounding box.

In a further embodiment of the system, generating the plurality of annotated frames comprises resizing the bounding boxes in the plurality of annotated frames.

In a further embodiment of the system, resizing the bounding boxes in the plurality of annotated frames comprises segmenting labelled objects, using a segmentation model, in each of the annotated frames and generating bounding boxes based on the segmented labelled objects.

In a further embodiment of the system, the video comprises parts moving within a manufacturing device. The system of claim 20, wherein the manufacturing device is a bowl feeder.

In a further embodiment of the system, the method performed by the controller further comprises determining a velocity of one or more of the parts based on tracking of the parts.

In a further embodiment of the system, the method performed by the controller further comprises generating bowl feeder control settings by applying a flow velocity of the parts to a predictive model.

In a further embodiment of the system, the method performed by the controller further comprises automatically applying the bowl feeder control settings to the bowl feeder.

In a further embodiment of the system, the method performed by the controller further comprises calculating one or more performance parameters based on the detected and tracked parts.

In a further embodiment of the system, the one or more performance parameters are used to determine one or more actions to perform, the one or more actions comprises one or more of: controlling one or more components of automation equipment; providing one or more suggested changes to components of the automation equipment; providing the one or more actions to perform to user interface functionality; providing the one or performance parameters to perform to user interface functionality; providing the one or more actions to perform to one or more software processes; and providing the one or performance parameters to perform to the one or more software processes.

In accordance with the present disclosure there is further provided a non-transitory computer readable medium storing instructions which when executed configure a controller to perform a method as described above.

**BRIEF DESCRIPTION OF THE DRAWINGS**

Several embodiments will be described in detail with reference to the drawings, in which:

FIG. 1 is a block diagram of an example system for a manufacturing line, in accordance with at least one embodiment described herein.

FIGs. 2A - 2C provide a pictorial representation of a propagation of particles for complex annotation tasks pipeline, in accordance with at least one embodiment described herein.

FIGs. 3A - 3C provide a pictorial representation of an application of a Segment Anything Model within the pipeline shown in FIGs. 2A - 2C, in accordance with at least one embodiment described herein.

FIGs. 4A - 4C provide a further pictorial representation of a propagation of particles for complex annotation tasks pipeline, in accordance with at least one embodiment described herein.

FIG. 5 is a computer vision system in an automation environment using the annotation, training and object detection described herein.

FIGs. 6A, 6B depict an example visions system in use with a bowl feeder.

FIGs. 7A, 7B depict an example visions system in use with a conveyor.

FIG. 8 depict an example visions system in use with a flex feeder.

FIG. 9 depicts illustrative tracking data of a plurality of frames of video.

FIG. 10 depicts the automatic annotation of a portion of video.

FIG. 11 depicts a method of tracking objects using a trained object tracking model.

FIG. 12 depicts a method of processing object tracking information.

FIG. 13 depicts a method of determining an average direction of an object.t

FIG. 14 depicts a method of determining an average velocity of an object.

FIG. 15 depicts a method of determining a feed rate of a feed system.

FIG. 16 depicts a method of detecting jams in a feed system.

FIG. 17 depicts an example overlay of object information.

The drawings are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

## DESCRIPTION OF EXAMPLE EMBODIMENTS

Various systems or methods will be described below to provide an example of an embodiment of the claimed subject matter. No embodiment described below limits any claimed subject matter and any claimed subject matter may cover methods or systems that differ from those described below. The claimed subject matter is not limited to systems or methods having all of the features of any one system or method described below or to features common to multiple or all of the apparatuses or methods described below. It is possible that a system or method described below is not an embodiment that is recited in any claimed subject matter. Any subject matter disclosed in a system or method described below that is not claimed in this document may be the subject matter of another protective instrument, for example, a continuing patent application, and the applicants, inventors or owners do not intend to abandon, disclaim or dedicate to the public any such subject matter by its disclosure in this document.

The systems and methods described herein can be used to annotate objects in a video which can be used to train an object detection model and, subsequently, tracking the objects in a plurality of images (i.e., video). In at least one embodiment, the objects are parts in a manufacturing process, such as but not limited to a bowl feeder. Although the application of the systems and methods for tracking objects are described as being used in association with a bowl feeder herein, it should be understood that the systems and methods for annotating, detecting and tracking objects may be applied to other processes and applications.

The systems and methods described herein can detect a presence of one or more parts, for example parts within a feeder and/or conveyor mechanism, track movement of parts across a field of view, and, for example, calculate a velocity of the parts over a duration of time. The systems and methods can generate segmentation outputs and bounding box outputs of the parts to be processed to collect data relating to the part, such as but not limited to part velocity, direction of travel, position, average velocity, and/or total distance travelled.

The systems and methods utilize point propagation and segmentation to annotate video which is used to train a detector for annotation of a plurality of images. The systems and methods exploit temporal consistencies in video sequences to propagate highly accurate labels which may be provided manually from a human operator. The annotation process described further herein may significantly reduce the amount of manual annotation required. For example it is possible to provide an overall manual-to-automatic annotation ratio of about 1:274 or more.

The systems and methods described herein can operate on limited GPU hardware and maintain a highly time-efficient annotation process. The systems and methods described herein minimize the human cost of annotating images by limiting annotation to a subset of total frames.

The systems and methods described herein may be particularly useful in a manufacturing or similar environment. In such an environment the objects being tracked may change from time to time, for example if a characteristic of the object changes or the environment changes such as the lighting or other configurations which may impact the object detection efficiency. In such cases it is desirable to have a way to generate new training data for the new objects and/or environment without requiring manual labelling of a complete training dataset.

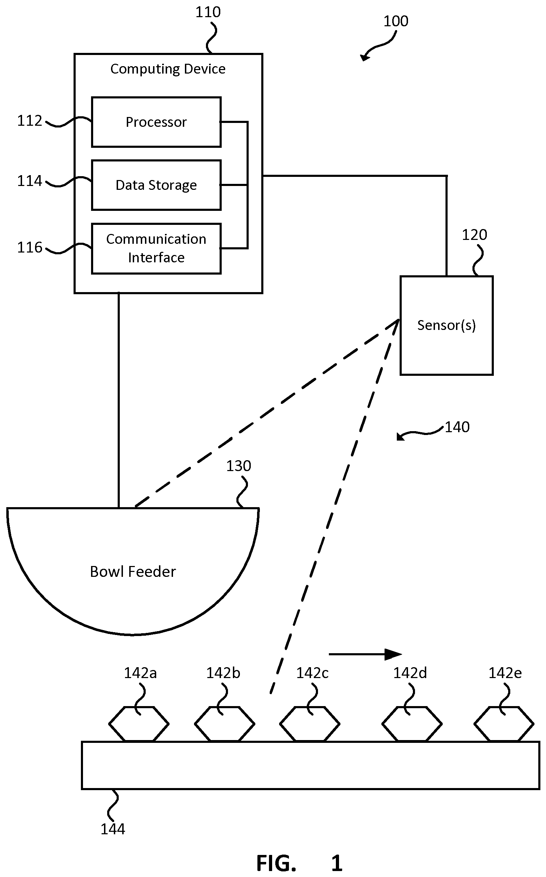

Referring now to FIG. 1, an example system 100 for a manufacturing line 140 is shown therein. Again, it should be understood that the systems 100 described herein may also be used in applications outside of manufacturing processes. Manufacturing process 140 is simply shown herein as one example of a use case of the systems and methods described herein.

As shown, system 100 can include at least one sensor 120 and a computing device 110. These are each described in greater detail below.

Manufacturing line 140 can be any type of production or manufacturing line for manufacturing, producing, or processing part 142. For example, the manufacturing line 140 can be configured to produce engine parts, medical devices, electronics, or any other articles. Generally, the manufacturing line 140 can include one or more subsections or stations (not shown) that are spaced along the manufacturing line 140 and configured to perform specific processing tasks on the parts 142a, 142b, 142c, 142d, 142e (collectively referred to as parts 142). Although five parts are shown in FIG. 1, the manufacturing line 140 can include any number of parts 142.

During operation, the parts 142 can be transported along the manufacturing line 140 and successively processed by various stations until a finished article is produced. As shown, the manufacturing line 140 may include one or more transport mechanisms 144 operable to transport the parts 142 along the manufacturing line 140, such as a linear or inline feeder, or conveyor. The particular arrangement and configuration of the manufacturing line 140 can depend on the type of the workpiece being manufactured, or part 142 being processed. In some embodiments, the transport mechanism 144 can transport similar parts 142 along the manufacturing line 140 synchronously. Parts 142 that are dissimilar may indicate that a production station did not process a workpiece properly, such as a missing part.

Parts 142 that are not moving synchronously may indicate an abnormality with the transport mechanism 144 that may require repair. As well, the transport mechanism 144 can stop at production stations to provide for the parts 142 to be processed at the production stations. In some embodiments, the change in the synchronous speed of workpieces may be a result of a deviation in the duration of a stop at the production station.

The subsections or stations can include a bowl feeder 130 that is configured to feed parts 142 to the manufacturing line 140. The bowl feeder 130 can output the parts 142 such that the parts 142 are spaced apart from one another (i.e., one-by-one). The spacing between parts 142 can provide for the parts 142 to be individually processed by a subsequent production station in the manufacturing line 140. In some embodiments, the bowl feeder 130 can output the parts 142 to have a particular orientation on the manufacturing line 140. The particular orientation of the parts 142 can provide for the workpieces 142 to be processed by a subsequent production station in the manufacturing line 140.

The bowl feeder 130 can include a plurality of shelves or ramps running up an interior side of the bowl feeder and an exit at an upper portion of the bowl feeder 130. The bowl feeder 130 can gently shake, which causes parts 142 to move up the ramp portions of the bowl feeder 130 and eventually exit individually. Under normal operation, parts 142 can be present along the entire length of the ramps, and be aligned towards the outer portion of the bowl and exit. However, an accumulation of parts 142 within a particular portion of the bowl feeder 130 can result in, or indicate, a jam. Fewer parts 142 in the lower portion of the ramps can also indicate that parts 142 are accumulating in some portion of the bowl feeder 130. As well, parts 142 that are misaligned or sideways, that is, not aligned towards the outer portion of the bowl and exit, can indicate that parts 142 are accumulating in some portion of the bowl feeder 130.

Although only a single sensor 120 is shown in the illustrated example, it will be appreciated that there can be any number of sensors 120. Furthermore, it will be appreciated that the sensors 120 can be positioned at various locations along the manufacturing line 140 and/or along or within bowl feeder 130. As shown, the sensors 120 may disposed proximal to the bowl feeder 130. For example, the sensors 120 may include one or more contactless sensors. The sensors 120 may be disposed on the bowl feeder 130. The sensors 120 may be proximal to the manufacturing line 140.

The at least one sensor 120 can include at least one image device capable of capturing images. For example, the image device can be a camera. The image device can capture a sequence of images of at least a portion of the bowl feeder 130. The sequence of images can include video data, such as a live stream of the bowl feeder 130. The image device can transmit the images to the computing device 110.

The at least one sensor 120 can include additional sensors to measure current conditions at the bowl feeder 130. For example, one or more additional sensors can measure one or more environmental conditions at the bowl feeder 130. Various types of additional sensors can be used to measure various types of environmental conditions. For example, the environmental conditions may include temperature, humidity, vibration, and the like. As shown, the environmental conditions can be measured by measuring various characteristics of the bowl feeder 130 and/or the surroundings thereof. The additional sensors 120 can transmit the measured environmental conditions to the computing device 110.

In some embodiments, the one or more additional sensors may include one or more temperature sensors. The one or more temperature sensors can measure the temperature of the bowl feeder 130. Additionally or alternatively, the one or more temperature sensors can measure the ambient temperature of the air adjacent the bowl feeder 130. Various types of temperature sensors may be used. For example, the temperature sensors may be provided by thermistors, thermocouples, resistance thermometers, and the like.

In some embodiments, the one or more additional sensors may include one or more humidity sensors. The humidity sensors can measure a humidity within the bowl feeder 130. Additionally, or alternatively, the humidity sensors may measure the ambient atmospheric humidity of the manufacturing facility. Various types of humidity sensors may be used. For example, the humidity sensors may be capacitive sensors, resistive sensors, or thermal humidity sensors, and the like.

In some embodiments, the one or more additional sensors may include one or more vibration sensors. The vibration sensors can measure a vibration of the bowl feeder 130. Various types of vibration sensors may be used. For example, the vibration sensors may be capacitive sensors, electromagnetic sensors, piezoelectric sensors, optical sensors, and the like.

In some embodiments, the one or more additional sensors may include one or more part feed sensors. The part feed sensors can count parts 142 output by the bowl feeder 130 to the manufacturing line 140. Various types of part feed sensors may be used. For example, part feed sensor may be proximity sensors, accelerometers, capacitive sensors, resistive sensors, electromagnetic sensors, piezoelectric sensors, optical sensors, and the like.

In some embodiments, the one or more additional sensors may include one or more part position sensors. The part position sensors can generate position data about the parts 142 within the bowl feeder 130. Various types of part position sensors may be used. For example, part position sensor may be proximity sensors, accelerometers, capacitive sensors, resistive sensors, electromagnetic sensors, piezoelectric sensors, optical sensors, and the like.

In some embodiments, the one or more additional sensors may include another image device. The other image device can generate image data of the workpieces in the bowl feeder 130. For example the other image device can be a scanner, such as a three-dimensional scanner. The other image device can transmit the image data to the computing device 110. The computing device 110 can determine dimensions of the workpieces within bowl feeder based on the image data. In some embodiments the computing device 110 can also determine dimensions of the workpieces based on a tracking data associated with the workpieces.

The computing device 110 can communicate with the bowl feeder 130, transport mechanism 144, and the at least one sensor 120. For example, the computing device 110 can receive data from the at least one sensor 120 and transmit data to the bowl feeder 130 and the transport mechanism 144. For example, the computing device 110 can receive images from an image device. The computing device 110 can also receive current condition data from one or more additional sensors. The computing device 110 can transmit control settings to the bowl feeder 130 and/or transport mechanism 144. The computing device 110 can also determine parameter settings from the bowl feeder 130 and/or the transport mechanism 144.

The computing device 110 can use various artificial intelligence or machine learning methods to predict anomalies along the manufacturing line 140, including the bowl feeder 130 and/or the transport mechanism 144.

In some embodiments, there may be a plurality of bowl feeders 130, a plurality of transport mechanisms 144, and a plurality of sensors 120, and the computing device 110 can communicate with each of the bowl feeders 130, transport mechanisms 144, and sensors 120 over a network. In this manner, the computing device 110 can perform the various monitoring methods described herein on the plurality of bowl feeders 130 and/or transport mechanisms 144 remotely.

The network may be any network capable of carrying data, including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX, Ultra-wideband, Bluetooth®), SS7 signaling network, fixed line, local area network, wide area network, and others, including any combination of these, capable of interfacing with, and enabling communication between, the various components of the system 100.

The computing device 110 can generally be implemented using hardware or a combination of hardware and software. For example, the computing device 110 may be implemented using an electronic tablet device, a personal computer, workstation, server, portable computer, mobile device, personal digital assistant, laptop, smart phone, WAP phone, PLC (programmable logic controller), industrial controller, microcontroller, or any combination of these.

In some embodiments, the computing device 110 may be provided by two or more computers distributed over a wide geographic area and connected through a network. As shown, the computing device 110 can include a processor 112, a data storage 114, and a communication interface 116. Each of these components may be divided into additional components or combined into fewer components. In some cases, one or more of the components may be distributed over a wide geographic area. It will be understood that some of the computing device 110 can be implemented in a cloud computing environment.

The computing device 120 can include any networked device operable to connect to the network. A networked device is a device capable of communicating with other devices through the network. A networked device may couple to the network through a wired or wireless connection. Although only one computing device 110 is shown in FIG. 1, it will be understood that more computing devices 110 can connect to the network.

The processor 112 can operate to control the operation of the computing device 110. The processor 112 can initiate and manage the operations of each of the other components within the computing device 110. The processor 112 may be implemented with any suitable processors, controllers, digital signal processors, graphics processing units, application specific integrated circuits (ASICs), and/or field programmable gate arrays (FPGAs) that can provide sufficient processing power depending on the configuration, purposes and requirements of the system 100. In some embodiments, the processor 112 can include more than one processor with each processor being configured to perform different dedicated tasks. The processor 112 can execute various instructions stored in the data storage 114 to implement the various control methods described herein.

The data storage 114 can include RAM, ROM, one or more hard drives, one or more solid state drives (SSD), one or more flash drives or some other suitable data storage elements such as disk drives. The data storage 114 can store various data collected from the sensors 120, the transport mechanism 144, and/or the bowl feeder 130. The data storage 114 can also store instructions that can be executed by the processor 112 to implement the various control methods described herein. In some embodiments, the data storage 114 may be more than one data storage component. For example, the data storage 114 may include a local data storage located at the computing device 110 and an external data storage that is remote from the local data storage and connected to the computing device 110 over a network.

The communication interface 116 can include any interface that enables the computing device 110 to communicate with various devices and other systems. The communication interface 116 can include at least one of a serial port, a parallel port or a USB port, in some embodiments. The communication interface 116 may also include an interface to a component via one or more of a Bluetooth, WIFI, Internet, Local Area Network (LAN), Ethernet, Firewire, modem, fiber, industrial network, Profibus®, ProfiNet®, OPC, DeviceNet®, EtherCAT®, Modbus®, or digital subscriber line connection. Various combinations of these elements may be incorporated within the communication interface 116. The communication interface 116 can be used to communicate with the bowl feeder 130 and/or the sensors 120, for example, to receive image data, current condition data, and parameter settings, and to transmit control settings.

For example, the communication interface 116 may receive input from various input devices, such as a mouse, a keyboard, a touch screen, a thumbwheel, a track-pad, a track-ball, a card-reader, voice recognition software and the like depending on the requirements and implementation of the computing device 110.

As noted above, the systems and methods described herein exploit multi-target and temporal features of videos to produce a semi-supervised pipeline for segmentation or box-based video labeling. The systems and methods utilize computer vision methods to train a detector for rapid inferencing. This augments the annotation methods described herein with high speed labeling once the algorithm is trained on a sparse set of human annotations.

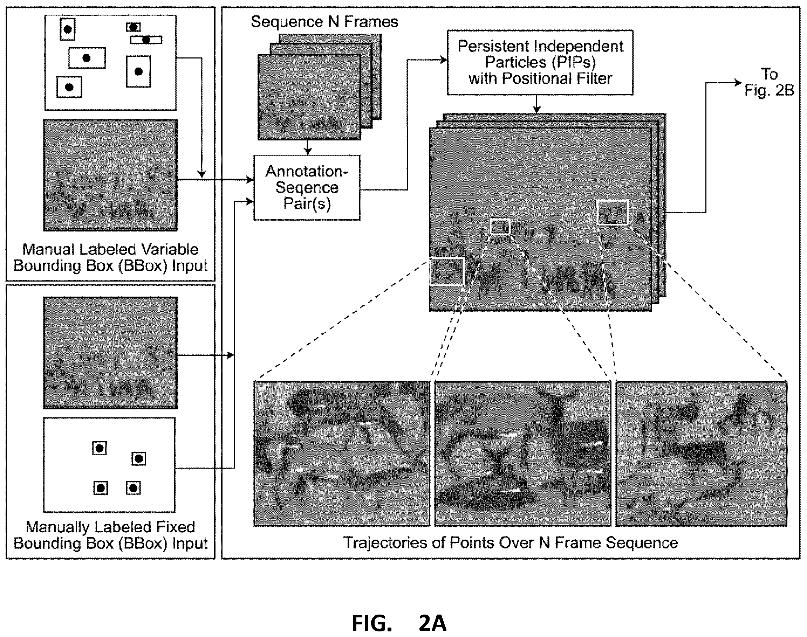

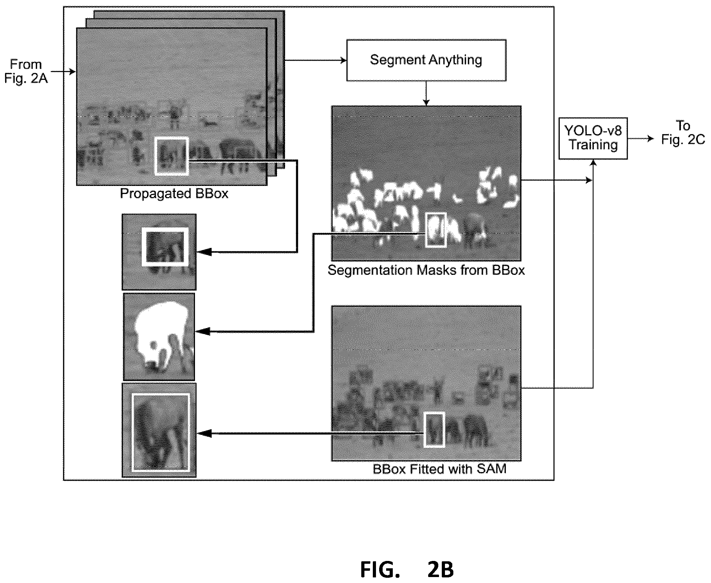

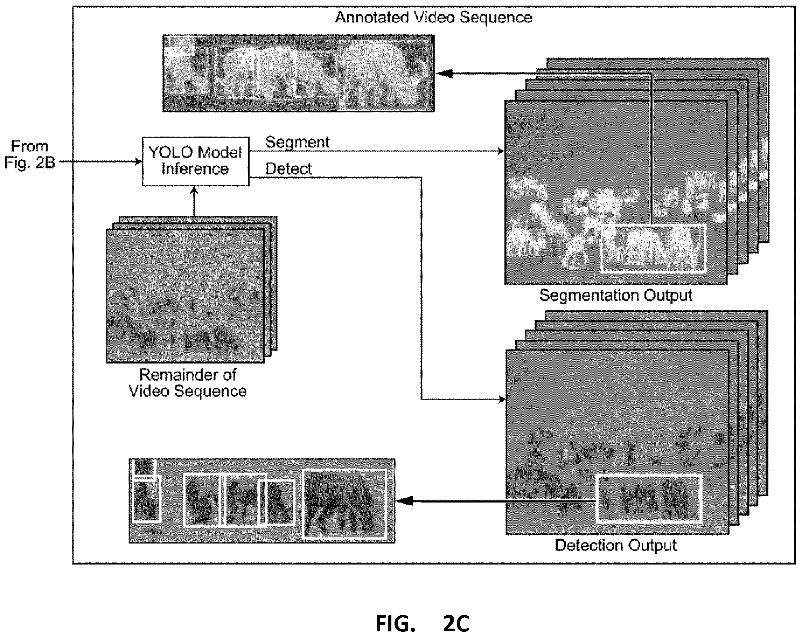

Referring now to FIG. 2, the systems and methods described herein can be described in at least four stages: (a) initialization, (b) propagation, (c) segmentation and box fitting, and (d) model training.

In at least one embodiment, input to the pipeline is an annotated frame with the output being the detected per-frame labels for an entire video sequence. This generic, multi-object, video annotating process provides for generation of per use case datasets for computer vision algorithms.

Modern object detectors adopt an out-of-the-box application with minimal modification required for implementation (e.g., YOLO, R-CNN, and DETR). In the systems and methods described herein, YOLO detectors have been used and demonstrated, however, other object detector systems may also be used.

In at least one embodiment, the systems and methods described herein are useful in situations where multiple targets, or objects, are present on a single frame of the video.

*Initialization*

The systems and methods described herein are trained through the use of human annotation. Specifically, an agent labels a subset of the parts on a subset of images of a sequence of images relating to a target environment (e.g., within a vibratory bowl feeder). In some embodiments, the annotator may label all targets in a single frame within a video. This is shown in FIG. 2A.

The labeled subset can then be propagated with algorithmic trackers across a set of frames of the video sequence. As described further below, in order to increase the number of frames that the manual annotation can be propagated to, the annotated frame may be located in the middle, or approximate middle, of the video sequence allowing the manual annotations to be propagated forward and backward. For example the annotations may be propagated to frames [t-a,t] and [t,t+a], where "t" is the labeled frame and "a" refers to the duration of frames to be propagated.

In one specific embodiment, manual annotation is supplied with a sequence of subsequent frames to create an annotation-sequence pair. For example, from a 1200-frame video, a single first-frame annotation for a 30-frame portion of the video would represent an annotation-sequence pair. The total number of necessary manual annotations can be reduced to the total number of annotation-sequence pairs used. For most video sets, a single annotation-sequence pair is required.

The initial frame annotation can take one of two forms: (a) variable box selection and (b) fixed box selection.

Variable box selection requires a fitted bounding box to be specified for each target and may be applied when targets take on a variety of sizes over the provided sequence. These variations may occur due to viewing angle, foreground-background travel, rapid target movement, and other variables. Variable box selection requires more annotation time as an individual must manually mark the extent of target boxes within the frame image being annotated. Conventional online annotation tools, such as but not limited to CVAT, can be used to expedite the frame labeling process for variable sized selection.

Fixed box selection may also be used and, generally, is considered to be the faster of the two methods. In this method, a user sets a fixed box width and height, and then clicks closest to all of the center points of the targets to be tracked. This method prioritizes speed as the user only sets the box sizes once, and then clicks on the center of targets. Based on this setup, a single annotator can rapidly annotate a given image by selecting the center point of targets within the image. The fixed box size should fully encompass the majority of the targets marked for propagation. However, overtly large boxes are not recommended as overlapped parts may be segmented as one large part. Therefore, for scenarios where the target takes on a multitude of shapes, it is recommended that the dimensional average of all boxes be used for propagation.

The precision of the labelling of objects in the frame is important as the point must be present on the intended targets for tracking. If the points are not on target then the tracker may track the background movement instead. To alleviate this, in some embodiments, small scale images can be upscaled to provide for the user to zoom in on targets to ensure correct selections. Once labeled, the annotations are passed to the point propagation stage.

*Point Propagation*

Persistent Independent particles (PIPs) can be used for point propagation for the proposed pipeline. This method effectively tracks the center points of the marked targets as a particle within the video.

In some embodiments, targets may be tracked as a bounding box. However, this could be computationally inefficient and be less robust to changes in background and box sizing.

PIPs utilizes a fully temporal approach to particle tracking that results in highly accurate point tracks across the propagated frames. In at least one embodiment, the points are tracked in eight frame sequences to overcome momentary occlusions in the video. However, due to a purely temporal focus, in this embodiment, false positive tracks may occur when points travel out of view.

It should be understood that point tracking in PIPs does not define the termination of any tracked point if the tracked object leaves the field of view. PIPs re-initialize on the 8th frame, therefore a lost particle would re-initialize to the last known position of the particle. In the absence of occlusions, this manifests as point tracking of the border of the image after a target leaves the frame of view. Therefore, a positional filter may be applied to terminate the point tracks once the target reaches the edge of the field of view. This may eliminate track drift in highly mobile targets.

In the embodiments described herein, the input to PIPs are the center point and box dimensions of the labels marked in the initialization. The center points can be propagated across frames through PIPs and the size of the bounding boxes for the tracked point can remain the same to modularize this stage. The same operations can be applied in PIPs regardless of initialization choice as a way of simplifying the design and configuration of the pipeline for the end user.

The output of this stage may be a set of text files for each frame, where each file contains the tracking information for the objects present in the frame. For example, the text file may comprise a plurality of lines, with each line providing an object ID and associated x,y coordinate of the tracked particle of the object. The text files may use a normalized YOLOv8 data representation of the propagated and filtered targets. These populated text files are fed into the segmentation stage of the pipeline.

*Segmentation*

These propagated labels can be processed frame by frame through a segmentation algorithm to provide for box labeling and generation of segmentation masks. This data is then used to train a box or segmentation detector to detect the presence of parts within the field of view. In use, object data is collected with the trained detector and then may be post-processed to calculate other data such as velocity, direction of travel, and average velocity over a set period of time. Each of these aspects are described in great detail below.

In order to generate the box label for each tracked point, which correspond to objects, a segmentation module is applied to enhance the accuracy of box annotations centered on the propagated points. In at least one embodiment, a Segment Anything Model (SAM) can be utilized as it is a zero shot, prompt-based segmentation model that is capable of segmenting most well defined shapes. Other segmentation models may also be utilized.

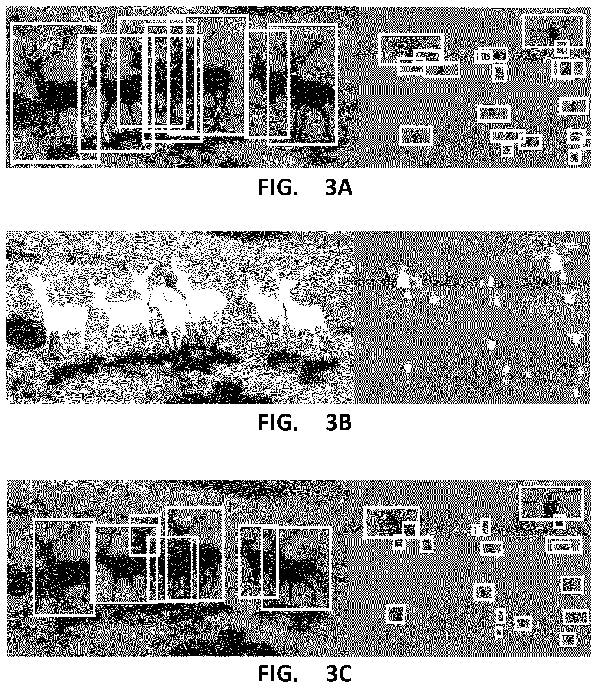

The propagated boxes from PIPs (center point with height and width) are utilized as prompts for automatic segmentation of targets within each frame. This is shown in FIG. 2B as well as in FIG. 3A. The propagated boxes may use the original height and width from manual labelling and the center point from the tracked points using PIPs. The propagated boxes may not provide an accurate box label for the object, that is the box labels may be too big or too small for the object in the frame.

A box can be applied around the target to eliminate much of the over-or-under segmentation issues associated with SAM. Given that SAM is a foundational model, it requires no further training to effect accurate segmentation masks.

SAM is utilized to effect a process known as box resizing. Others have demonstrated how precision and recall increased proportionately to improvements in the bounding box fit. FIGs. 3A-3C demonstrates this process, where FIG. 3A shows the originally labeled boxes, FIG. 3B shows the object segmentation based on the originally labeled boxes, and FIG. 3C shows the labeled boxes generated via the segmentation process. To generate these boxes a canny edge detector is applied on the segmentation mask shown in FIG. 3B to extract the contours of the segmentation. From there, a minimum bounding rectangle is applied to the contours to effect the minimum box representation of the mask. The contours may also saved for training of the segmentation detector in subsequent stages. One should note in FIGs. 3A-3C that the box resizing method can increase and decrease the size of bounding boxes to capture the full content of the target. This includes the extraction of segmentation masks and the creation of fitted bounding boxes. The output of this stage provides the bounding box dimensions for each object in each frame. The output may also include the segmentation information for each object. The output may be provided as YOLO formatted text files that include bounding box dimensions in one set of text file and segmentation x,y tuples in another set of files.

*Training* of *Yolo Model*

The goal of the previous stages was to propagate a first-frame annotation across a sequence to increase the number of annotated instances in an automated manner. At the present stage, the automatically annotated instances of frames are utilized to train a detector or segmentation model, such as the YOLO-v8 model, as depicted in FIG. 2B. The pipeline can provide the training data necessary to effect either a box or segmentation model depending on the annotation requirements. For example, if the detector is trained to provide a box label for objects, the box labels may be provided for training, whereas if the detector is trained to provide a segmentation mask label for objects, the segmentation information may be provided for training. Again, it should be understood that any detector model could be used in place of the YOLO model as inputs to this stage are just training data. This modularity is intentional as it can provide for the adaptation of the pipeline for more specialized use cases (examples of which are described below).

*Application of Trained Models*

By training an object detector based on the automatically annotated instances generated with the algorithm described above, the speed of the YOLO detection algorithm can be leveraged for high frame volumes. For example, in one example, a 10-minute at 30fps video may contain 18000 frames. Assuming a 20-point or objects first frame annotation for point propagation, Table 1 showcases the breakdown of time taken in seconds to process each stage of at least one pipeline described here.

Table 1: Time breakdown for annotation of a 10 minute video

| Stage | Time (sec) |
|---|---|
| *First frame labeling* | 120 |

(continued)

| Stage | Time (sec) |
| --- | --- |
| *PIPs Propagation* | 400 |
| *SAM Propagation* | 300 |
| *YOLO Model Training* | 360 |
| *Yolo- Inference(remaining frames)* | 600 |
| **Ours Total time to annotate** | **1780 ~ 10FPS** |
| Youtube-BB multi-annotator manual method [29] | 1 FPS |

This example demonstrates the effectiveness of the pipelines described herein in the areas of human cost (e.g., 1 labeled frame), and time efficiency (e.g., 10 FPS).

*Run Object Detection Algorithm on Captured Video*

The trained detection model can then be run on an entire video set to detect the objects within the video set. All object data may be captured and stored within one or more text files that can saved locally or externally. The text file(s) may include capturing identification numbers (IDs), pixel positions, etc.

*Applications in Manufacturing Processes*

In at least one embodiment, a velocity of the object (i.e., parts in a manufacturing process) can be determined using the systems and methods described herein. For example, a velocity calculation may be performed by calculating a displacement of a specific ID over a set of frames of the video. Put another way, if a specific part is shown on frames [1,2,3,5,6,9], then a displacement of the part can be calculated between frames and stored as a total. To calculate the velocity, the displacement difference could be divided by the frame difference.

For example, if velocity is calculated over a five frame interval (e.g., averaged over five frames), then the velocity can be calculated as the distance or displacement of the object over the five frames divided by the length of time for 5 frames. So for example at 30 frames per second the length of time for the 5 frames would be 1/30fps*5frames=0.167seconds.

In at least one embodiment, the code to calculate velocity may include a noise suppression step where the displacement of frames is only logged if it exceeds a predetermined threshold. For example, in the above frames 6 then 9 are shown. This can occur if at frame 7 and 8, the displacement between frame 6 and frames 7 and 8 is below a threshold. This is to remove jittering of the object. "

In at least one embodiment, various calculations on the parts moving within the video, particularly if they are moving within a bowl feeder can be performed. For example, lanes of the bowl feeder may be separated, for example by optical flow where an algorithm will mark differences based purely on motion of the objects in the video. The average of the highest moving areas (i.e., part lanes) and use that to mark out the lane locations and boundaries. The velocity stream of the parts can be used to mark out locations and boundaries of part paths, even if they separate into multiple lanes or locations.

In bowl feeding applications, it may also be advantageous to collect both directional travel and part velocity. Other parameters that may be collected and analyzed include but are not limited to: measuring angular velocity and time it takes to travel through a bowl, heatmaps outlining part travel times and zones of conflict, debris detectors, lane performance - estimating tool efficiencies (e.g., within the bowl, flow in different sections of the bowl), part density, part types, lane rate, etc.

The average transit rate of parts around one or more circumferences of the bowl may be used as a baseline of the setup and health of the feed system. If this velocity changes overtime it can alert the operator to changes in part condition/product lots, surface quality of the bowl, debris buildup, control changes, sensitivities to fill level and host of other actionable root causes. In particular, inconsistencies in the velocity vector field can highlight vibrational dead spots, which may be standing waves of limited vibration due to the driving frequencies relative to the structure of the tooling, burrs or rough areas in the tooling, debris, etc. In areas of part selector tooling, which may comprise tooling, sensors, actuators, and/or air jets which divert incorrectly oriented or non conforming, such as doubled or tangled, parts into a different stream, typically back to the bottom of the bowl, the part tracking can be used to estimate the effeciency of the design and setup of the selectors. For example, if 75% of the main part stream is being recycled at Selector 2, this may indicate to the technician to focus on this area to improve this setup or the upstream tooling in order to increase the good parts through this selector.

*Velocity Calculations*

In one example, in determining a velocity of parts within a bowl feeder, the determination of slow moving areas can be determined. Determination of slow moving areas first requires generation or identification of regions of the bowl feeder. This can be achieved manually or through optical flow or other computer vision techniques that map a location of moving parts for a loaded bowl feeder. The method identifies all moving parts within the bowl and tracks part trajectories during operation of the bowl feeder.

In at least one embodiment, these paths can be captured and an overall path for part movements within the bowl can be generated. Once the path of multiple parts is generated, a length of the path can be split into segments automatically by separating the circle (e.g., ring of the bowl) into a plurality of segments, also referred to as regions,(e.g., six segments, twelve segments, etc.). Individual part velocities can then be mapped into each of the generated segments, and an average velocity, direction of travel, and part count can be generated. Slow moving sections can be identified through comparison of the average segment velocity to a baseline velocity collected for correct operation. Jams may also be detected through identification of low velocities and static part counts within segments. Once these scenarios are detected, flags can be raised to the operator or automatic adjustments can be applied to the bowl parameters, as described below.

Velocities may also be calculated by tracking individual parts within the video. In at least one embodiment, a tracker can be applied to the detection results to create an ID for each detected part within the video sequence. The position of each of the parts in the video can be saved for each frame, with the corresponding ID of each of the parts. The position of each of the parts is saved with the ID followed by a bounding box descriptor, or as an ID followed by the extents of a segmentation of the bounding box. As noted above, the centre of the bounding box or segmentation may be used as a reference for all calculations. That is, a distance between centre points of the box between two frames corresponds to a distance travelled between two frames. In some embodiments, this may be more accurate for non-square shaped bounding boxes that can occur within standard bowl feeder operations. From there, the frames and positional data can be batch processed, or processed in real-time, to create a list of frames that the part was active or present in. The framerate for the video can then be collected and used to perform a calculation for velocity.

Prior to the calculation of velocity, a list of data is created for each ID that comprises, but is not limited to, the position, total distance travelled, frame number, count of the number of frames of movement, and a list of distances travelled by the part at different frames. An element may be added to this list if the distance travelled within two frames is greater than a predetermined threshold. Put another way, an object must at least travel a distance equal to or greater than the predetermined distance between two frames for its corresponding values to be recorded as a new element. This reduces noise due to bowl vibration or camera vibration in the video.

Once generated, this list is fed into a velocity and average direction calculation for each of the parts. Velocities are calculated by taking the difference of displacements between frames and dividing it by the number of frames used for the calculation. This provides for mapping of velocities over 2, 5, 10, or any number of frames. This can provide more granular data and accounts for travel across curves in the video. The systems and methods described herein provide velocity in pixels per frame but can be converted to real world values if a scaling factor is provided. The systems and methods described herein also provide directional data in addition to velocity to identify potential dead spots (areas where parts are not responding or moving when bowl vibrations are applied), abnormalities in movement (parts moving backwards against the bowls normal direction), and jams. This data is saved to a text file in, for example, a comma separated format, although other formats may be used. The data can be indexed by both frame number and part id to facilitate user processing of the data for predictive or analytical models. The system also provide an output of overlays of part velocity at different frame intervals, part direction over different frame intervals, and parts with id overlays for human processing.

Other examples of applications of the systems and methods described herein include but are not limited to: conveyor applications where capturing part velocity, part orientation and foreign object detection are advantageous; flex feeding applications where capturing part velocity and part orientation may be advantageous which can provide input data for part manipulation mechanisms to improve the number of correctly orientated parts; machine component applications where capture of servo velocities, retract times on actuators, etc. is advantageous for example for process optimization and predictive maintenance; and OEE applications for identifying is a specific sequence of events happens within a cell.

*Experiments and Results*

*Datasets*

The Visdrone-2019 video detection challenge, GMOT-40, AnimalTrack sets were used to benchmark the performance of the systems and methods described here. These sets contain high-quality ground truth bounding box data for video sequences of varying duration. Set variations in video data included lighting, object sizing, movement, occlusion, camera position, camera motion, and target volumes. The Visdrone-2019 challenge test-dev set contains multi-class detection data, variable-sized classes, and variations in video sizing. As noted above, the systems and methods descr4ibed herein utilize three annotation sequence pairs from the start, middle, and end of each video. This is done to address temporal class imbalances in the video. Temporal class imbalance refers to the situation where classes at the start of a sequence are not representative of the end of the sequence. This is simply a heuristic method to address wide variations in the context of the video. There is still the possibility that certain classes will be missed through this method, however, there is a desire to benchmark the effectiveness of the system with limited data. A single detector model is trained for validation on all videos in the testdev set to match the challenge protocol

GMOT-40[1] and AnimalTrack[2] are tracking datasets that benchmark detection protocols with a variety of trackers. GMOT-40 and AnimalTrack feature numerous targets per frame in a single-class configuration. Training on each video occurred separately in the pipeline with a single start frame annotation-sequence pair. The training methodology matches the GMOT-40 one-shot protocol to allow for results comparison. AnimalTrack detectors utilize a subset of dataset for testing, and the reported results are collected on the same subset. Both ablation studies are conducted on the full sets of GMOT-40 and AnimalTrack.

*Implementation Details*

Starting with point propagation, a modified variant of the chain-demo.py implementation was developed from PIPs. This implementation features a dictionary which keeps track of the tracking id, box dimensions, and position of the points being propagated. A positional filtering subroutine is implemented within this section to eliminate stray points. The resolution was set at 1280x720 with a 30 frame sequence. This is done to adhere to the VRAM constraints placed on the system.

Next, SAM is modified to operate in a batched sequence with an image resolution of 1280x720. The resolution is upscaled to effect accurate segmentations in operation. Prediction in batches of 50 points at a time and concatenate the results was made at the end in order to limit the amount of GPU ram usage. This allows the system to operate on older or more constrained hardware setups.

The solution uses a fixed training and validation confidence of 0.2, with an IOU of 0.5 with agnostic nms enabled for the yolox.pt weight configuration for the detector model. Training epochs are fixed at 25 for all YOLO models, with a batch size of 12, image size of 640, randomized model weight, SGD optimizer, learning rate of 0.01, and default parameters as dictated by YOLO for all processes. Data augmentation methods are disabled during training. Propagation, segmentation, model training, and inference are performed on a single NVIDIA Titan X GPU.

With this implementation, the pipeline is able to maintain the low gpu compute resource constraints while annotating a significant amount of data.

*Evaluation Metrics*

The results are compared to other methods through mean average precision (mAP), mean average precision at 50 percent intersection over union (mAP50), and recall when available. This information details the effectiveness of our algorithm when compared to the ground truth data. For example, a recall of 75% is indicative that our system is capable of noting 75% of the total labels based on the applied pipeline. For data referenced in Table 2, recall and precision was available on a case by case basis. For a more detailed analysis, precision, recall, true positive (TP), false positive (FP), false negative (FN), mAP50, mAP, and F1 confidence scores for the pipeline. This should allow future comparison of our solution with one-shot, fewshot, and semantic-based methods. It is noted that a proper annotation method should minimize false positives while maximizing true positives to enhance downstream detector performance.

Table II GMOT-40 AND ANIMALTRACK SUBSET DETECTION COMPARISON. COMPARISON RESULTS OBTAINED FROM [1]. [2], [20], [36]. (-) MEANS NO METRIC PROVIDED BY PUBLICATION. FIXED/VARIABLE Box INDICATES PROVIDED BOX FORMAT, SAM INDICATES PRESENCE OF SAM MODULE, POS. INDICATES PRESENCE OF POSITIONAL FILTER. BEST RESULTS ARE IN **BOLD.**

| GMOT-40 - Method | Recall% | mAP50% | mAP% |
|---|---|---|---|
| *GlobalTrack [34]GMOT-40[1]* | - | 15.65 | - |
| *Z-GMOT GLIP[20]* | - | 66.20 | 36.10 |
| *Z-GMOT iGLIP[20]* | - | 66.90 | 40.00 |
| *Siamese-DETR (COCO[35])[36]* | 49.90 | 63.60 | - |
| *Siamese-DETR (Objects365[37])[36]* | 55.40 | 69.60 | - |
| *Fixed Box SAM Pos.(Ohurs)* | 74.97 | 74.92 | 40.62 |
| *Variable Box SAM Pos. (Ours)* | **79.93** | **79.19** | **44.81** |

(continued)

| GMOT-40 - Method | Recall% | mAP50% | mAP% |
|---|---|---|---|
| **AnimalTrack Subset** - Method | Recall | mAP50 | mAP |
| *Faster-RCNN [38] AnimalTrack[2]* | - | 34.40 | 16.10 |
| *Fixed Box SAM Pos.(Ours)* | 64.04 | 70.57 | 35.61 |
| *Variable Box SAM Pos.(Ours)* | **72.55** | **77.57** | **43.90** |

Table **III** VISDRONE-2019 TASK 2 VIDEO DETECTION RESULTS ON TEST-DEV SET. OUR TRAINED DETECTOR IS VALIDATED AGAINST RESULTS PROVIDED BY [30]. [31]. YOLOv8 TRAINED CONTROL MODEL 15 USED FOR COMPARISON PURPOSES[45]. BEST RESULTS FOR THE COMPARION ARE IN **BOLD.**

| Method | Recall% | mAP50% | mAP% |
|---|---|---|---|
| *Faster R-CNN[38][30]* | 13.55 | 26.83 | 10.25 |
| *CornerNet[39][30]* | 24.03 | 28.37 | 12.29 |
| *CenterNet[40][30]* | 24.87 | 28.93 | 12.35 |
| *FPN[41][30]* | 25.59 | 29.88 | 12.93 |
| *D&T[42][30]* | 25.64 | 32.28 | 14.21 |
| *FGFA[43][30]* | 27.21 | 33.34 | 14.44 |
| *FCOS[44] Baseline WACV22' [31]* | 26.98 | 32.42 | 11.44 |
| *Video-Rep. WACV22' [31]* | 41.28 | 49.01 | 21.82 |
| *YOLOV8 Trained Contol[45]* | 46.50 | 49.50 | 27.50 |
| *Multi-Class Variable SAM Pos.(Ours)* | **48.80** | **58.40** | **29.30** |
| *Single-Class Variable SAM Pos.(Ours)* | **60.30** | **72.00** | **37.70** |

Multi-class and single-class performance are explained separately. Starting with single class datasets, Table 2 shows that the pipeline outperforms all available works under the reported recall, mAP50, and mAP metrics. The proposed solution performs the best by a margin of 19.5%, 5.3%, and 0.6% under the fixed regiment of GMOT-40 for recall, mAP50, and mAP. The variable regiment outperforms the competitors by a margin of 24.5%, 9.5%, and 4.8% to the corresponding metric leader.

The pipeline performance over the test set of AnimalTrack is reported in Table 2. The systems and methods described herein performed 36.1%, and 19.5% better in mAP50 and mAP results when compared to the faster-RCNN baseline for fixed selection. Results are averaged to a 43.1%, and 27.8% improvement in mAP and mAP50 for the variable selection cases.

Benchmarking on the Visdrone-2019 test-dev dataset shows that at least one pipeline described herein outperforms all other detectors by a minimum margin of 21.6% in recall, 25.0% in mAP50, and 14.8% in mAP (see Tabel 2). The system has access to 54 frames out of the total 6635 frames of the testing dataset. The pipeline is able to capture context specific data about the environment and targets which leads to significantly better results. Production applications would allow for a calibration phase for vision systems which allows for training of the system on the intended operational views. To validate the operation of yolov8, a pretrained yolov8-x.pt model from huggingface was utilized and validated with the same setting on Visdrone dataset. The pipeline outperforms the control test by 2.3% recall, 8.9% mAP50, and 1.8% mAP. This test demonstrates that the labeling methodology has a significant impact on the performance of the yolov8 detector. Furthermore, it demonstrates that the YOLOv8 architecture has an excellent capacity to learn and adapt to difficult datasets.

A third experiment quantifies the effect of class mismatches in the model. Class mismatch in the multi-class model refers to instances where the boundaries of an object are marked with the incorrect class. Class mismatch (shown in Appendix, below) where the trucks are misclassified as pedestrians (red). Under the Visdrone challenge, class mismatch occurs as a result of class imbalance and the sparse labeling methodology applied. To verify this phenomenon, a single-class experiment was performed on Visdrone and evaluate the precision and recall of the system. The single class model shows an improvement of 11.5% recall, 13.6% mAP50, and 8.4% in mAP (see Table 3). This means that the detector is still capable of detecting all listed targets but struggles with class assignment. Including a classifier stage at the end of the system may improve multiclass results.

With this pipeline, a total of 149 ground truth annotations (40 GMOT-40, 58 AnimalTrack, 51 Visdrone) generate 4470 labeled frames for 115 separate videos (40 GMOT-40, 58 AnimalTrack, 17 Visdrone). 99 detection models were trained to inference a total of 40947 frames (9603 GMOT-40, 24709 AnimalTrack, 6635 Visdrone 2019 Test-set dev) with the data above. The manual frame-to-inference frames ratio is 1:274, making the pipeline extremely efficient for video annotation.

*Ablation Study*

The goal of the ablation study is to validate the design choices of the systems and methods described herein. All results were collected with the implementation detailed above for GMOT-40 and AnimalTrack. Visdrone was not included in the ablation study, as variables such as class distribution, variations in object sizing, ID switching, and scene entry cannot be ablated in an effective manner.

Application of Positional Filtering: Positional filtering as it relates to the pruning of objects, is used to control tracks that leave the extent of the image. This feature reduces the false positive percentage (FP%) by eliminating erroneous annotations due to loss of track in the propagation stage. The overall FP% observes a reduction of 1.4% (fixed box selection), 0.8% (Variable box selection), 0.3% (Fixed box with SAM), and 0.3% (Variable box with SAM) for the GMOT-40 dataset. Positional filtering minimally impacts the recall%, with increases under 1.0%. For AnimalTrack, the overall FP% is reduced by 0.3% (fixed box selection), 0.5% (variable box selection), 0.8% (Fixed box with SAM), and 0.2% (Variable box with SAM). The percentage recall increase by less than 1% for AnimalTrack cases. In the Appendix below, the effect of positional filtering on the output results is depicted. By removing lost tracks, the accuracy of the dataset used to train the detector is ensured. Therefore, the inference frames no longer show FPs. The characteristics of the object trajectories within a video dictate the impact of positional filtering on performance. Highly mobile targets will benefit more from positional filtering.

2) Application of Segment Anything Masking: The percent recall is increased by 13.3% in GMOT-40, and 10.7% in AnimalTrack between fixed selections and fixed SAM method. The use of SAM to improve the precision of bounding boxes halved the FP% with a reduction of 12.4% and 13.3% for the fixed box annotation of GMOT-40 and AnimalTrack. SAM has a lesser effect on variable box annotations with the recall increasing by 4.9% for GMOT-40 and 0.5% increase for AnimalTrack. For the variable box selection, the effect of SAM on FP% is observed to be mixed, as GMOT-40 has a 0.8% decrease, and AnimalTrack averages a 2.1% increase. Elevated FP% in AnimalTrack may be due to differences in the ground truth box size and detected size. A qualitative review of videos indicates that output box detections are smaller than ground-truth detections resulting in an incorrect FP assumption. Increases in recall are also observed in the higher number of detections. Based on these results, SAM is a critical addition to the systems and methods described herein.

3) Bounding Box Size Initialization: Depending on the annotation requirements of the dataset, a fixed or variable box may be used. GMOT-40 observes an average increase of 13.0% in recall between fixed-box and variable-box methods. The SAM-based methods average an increase of 4.6%. The FP% is halved, an average decrease of 14.4% from 23.7% for fixed-box to variable-box, and 2.9% from 8.4% for the SAM-based methods is observed. Under Animal-Track, the recall is increased by an average of 19.0% (fixed box and variable box) and 8.7% (fixed SAM and variable SAM). The FP% is decreased by an average of 16.5% from 26.0% (fixed-box and variable-box) and 1.0% from 12.8% (fixed-SAM and variable-SAM). The performance improvements result from a better representation of the target data. With a variable box selection, the target is fully enclosed in the annotation-sequence pair. This leads to a more accurate box representation of the target which improves the trained detector performance.. The performance improvements are at the cost of labeling complexity and annotation time for the first frame.

The above has described a process for propagating a small set of manual labels across a number of frames of video. The video frames with the propagated labels can then be used as training data for training a object detection/-tracking model which can subsequently be deployed. The same or similar process may be particularly useful in a manufacturing and/or assembly environment. In such an environment an object detection model may be used to detect and track objects through out the manufacturing process, or portions there of. Detecting and tracking the objects may be used for a variety of purposes. In such applications it may be desirable to periodically re-train the object detection/tracking model. For example, the manufacturing environment may be adjusted to assemble a different component, or a part may change a physical characteristic or the environment may change, which may make the previously trained object detection/tracking model less accurate in the object detection. It is desirable to have a process for training an object detection/tracking model that is simple to perform, requires minimal manual intervention and provides an sufficiently trained model to be useful in subsequent object detection and tracking.

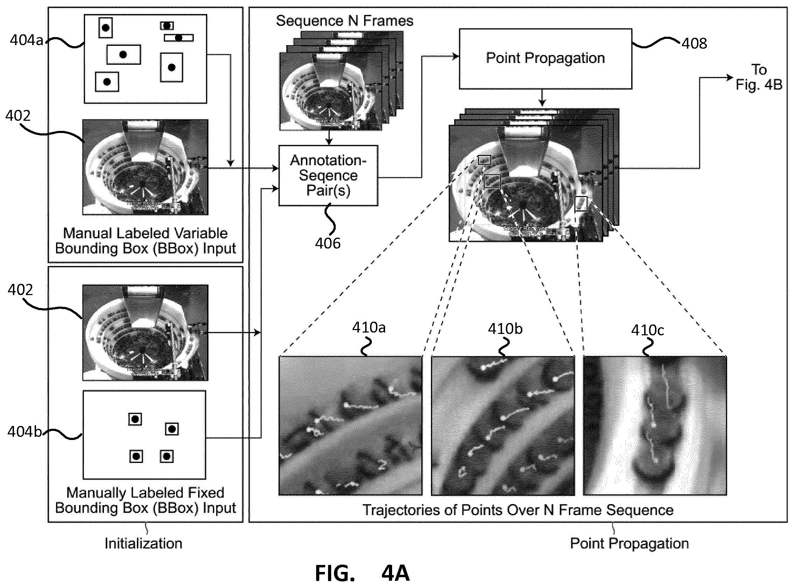

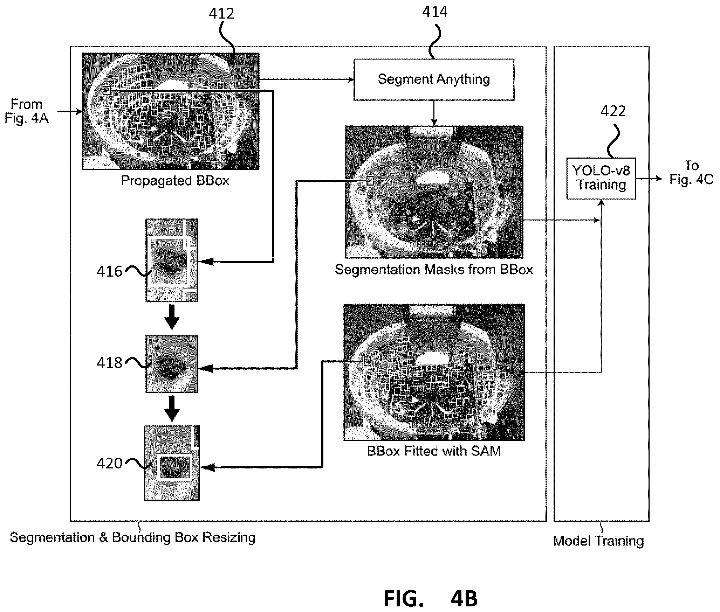

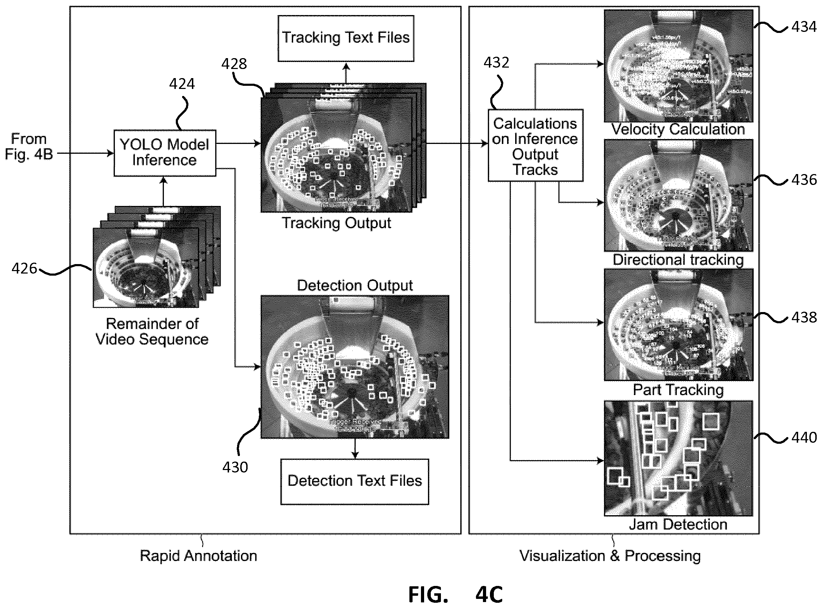

FIGs. 4A - 4C provide a further pictorial representation of a propagation of particles for complex annotation tasks pipeline, in accordance with at least one embodiment described herein. The propagation of particles depicted in FIGs. 4A - 4C is similar to that depicted in FIGs. 2A - 2C. One or more video frames 402 are manually annotated. Each object in the frame or frames being manually annotated can be labeled with a bounding box centered on the object. The height and width of each bounding box may be set either manually or automatically. Manually specifying the height and width of each bounding box 404a may require more effort from the user. Alternatively, the height and width of each bounding box 404b may be set and used for all bounding boxes labelled by the user. As such, the user only needs to select the center of each object to label the object with a bounding box. Once the frame, or frames, are annotated they are used to generate annotation-frame sequence pairs 406. Each annotation-frame sequence pair may comprise the manually annotated frame and a number, N, of subsequent, or previous, frames. The number N of frames used for each manual annotation may vary based on the application, and may depend upon how long objects remain in the scene, and so can have the manually annotated labels propagated across frames. The annotation-sequence pairs may be provided to the point propagation functionality 408. The point propagation functionality 408 propagates the manually annotated bounding boxes, or at least the center points of the bounding boxes, across the frames. Reference numbers 410a, 410b, 410c depicts a plurality of propagated bounding box centers for a plurality of objects that were manually annotated. The bounding box dimensions of each annotated object can be applied to corresponding propagated points to provide propagated bounding boxes 412. The propagated bounding boxes 412 may be used directly for training of object detect/training models, or may be further processed before being used for training. The propagated bounding boxes may not accurately fit the objects, for example at the end of the video sequence the size of the object may differ and so the bounding box is no longer accurate. In order to provide an accurate bounding box the frames can be processed to segment objects based on the propagated bounding boxes. A segment anything model 414 can be used to segment the objects 416 in each frame. A segmentation mask 416ngenerated by the segment anything model can then be used to generate a bounding box. As described above, edge finding can be applied to the segmentation mask and then a bounding box 420 can be created that encloses the contour of the mask. The video sequences with the propagate and resized bounding boxes labelling the tracked objects can then be used to train an object detection/tracking model such as YOLO-v8.

Once trained on the automatically annotated video sequences, the trained model can be deployed on video sequences from the manufacturing environment. The video sequences may be processed by the trained model 424 in real-time or near real-time or may be processed offline. The video sequences 426 may be provided to the trained model which can provide tracking output 430 providing the movement of the objects across the video sequence and detection output for each frame 432. The tracking and/or detection output can be used to provide various calculations and/or inferences 434. For example, velocity calculations 436, directional tracking 438, part tracking 440, jam detection 442 among other calculations or inferences can be performed.

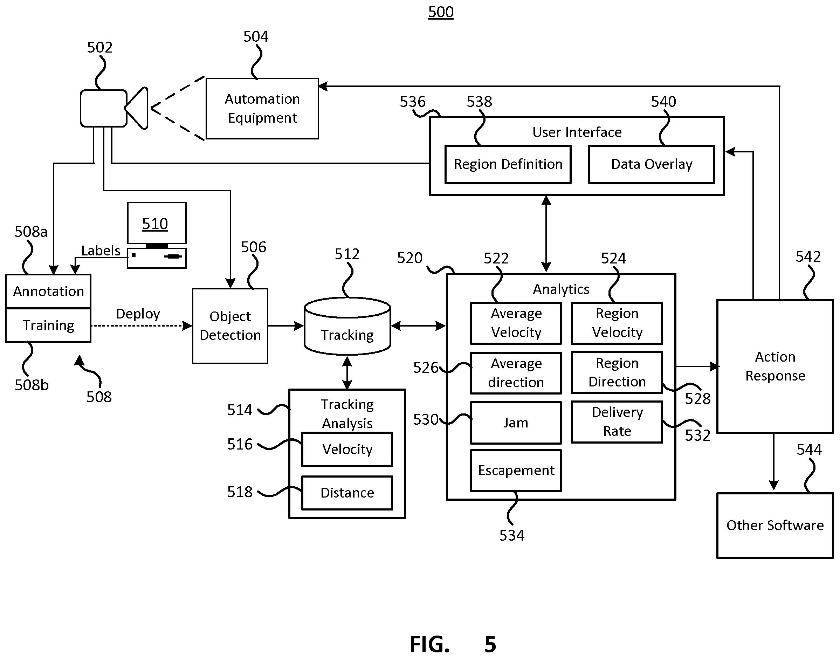

FIG. 5 is a computer vision system in an automation environment using the annotation, training and object detection described herein. The system 500 can be deployed in various automation applications. The system uses a vision system 502 to monitor some automation equipment 504, or a portion of the automation equipment for the automation application. When the automation equipment is online, the vision system is used to provide object detection functionality 506 using a trained object detection and tracking model, such as YOLO although other models may be used, that has been trained, or fine-tuned, to detect and track objects in the automation equipment.

As described above, the object detection model can be trained using data captured from the imaging system 502 in the actual automation environment. The training process 508 comprises first annotating a set of video frames captured from the imaging system which can then be used for training the object detection model. The annotation of the set of video frames may be performed by annotation functionality 508a and the training of the object detection model may be performed by training functionality 508b.

In order to train an object detection model, a relatively larger number of annotated images are required. In the automation environment this may require the manual annotation of a large number of frames of video, each of which may comprises a number of similar objects that all need to be identified. This process can time consuming especially if performed in the automation environment in which a user performing the annotation is not highly trained in the process. As described above, the need for the manual annotation of all objects in each frame of video can be reduced by manually annotation a frame of video by a user and then propagating the labels of the annotated frame across subsequent and/or previous frames of the video. The annotation of individual frames may be manually done by a user on a computer 510 or other computing device that allows the frame being annotated to be presented to the user and a plurality of objects in the frame labelled with a respective bounding box. As described above, with particular reference to FIGs. 2A-2C and 4A-4C, the manual labeling of the individual objects in the frame being annotated may specify the dimension of each individual bounding box, or may use a fixed size bounding box for all object labels which only requires the user to specify object centers of the individual bounding boxes. The centers of the bounding boxes may then be propagated over the other frames of the video and used as the center of the respective labelling bounding boxes of the objects as they move in the frames. Each frame of video, with the objects labelled with the bounding boxes, can be used for training or fine-tuning the object detection model. Additionally, or alternatively, the initially sized bounding boxes may be used by a segmentation process to generate a segmentation mask of the object, which in turn can be used to define a bounding box for the object. The defining the bounding box on the segmentation mask can provide a more accurate bounding box for objects compared to reusing the original bounding box dimensions. The frames with the resized bounding boxes can be used for training the object detection model. Once trained for the automation equipment in the automation environment, it can be deployed for tracking objects or other components it has been trained on, in video captured from the imaging system 502 during operation of the automation equipment.

When the trained object detection model 506 processes video, it outputs detection data for each frame of video.

The object detection model may process a continuous stream of video frames, or may process a portion of a video stream. For example a continuous video stream may be split into 10 second length video clips which can be processed by detection model. Although described as using 10 second long video clips, any length may be used. The detection data may be provided in various formats. For example, one such format may use a single text file for each video clip processed. The text file may comprise information on each line for the individual objects detected in a frame. Each line may specify the frame number, an object ID the line information is associated with and information on the bounding box of the object in the frame. The bounding box may be specified in various ways such as by specifying a position of the center of the bounding box, along with a height and width of the bounding box. Additionally or alternatively, the height and width of the bounding boxes may be fixed and only the centers specified. Additionally, or alternatively the location and size of the bounding boxes may be specified by providing the x,y locations of a diagonally opposite corners of the bounding boxes. The text file, or other data structure may include additional information.

The detection information may be stored in a data structure such as a database 512. It is noted that the text files may be stored directly in the data structure, or may be processed and stored. For example, the above example text file may be processed in order to read the data from the text file and store it in one or more tables. The object detection data may be processed in order to provide various tracking analysis. The tracking analysis may be stored in the data structure, for example possibly by appending the data to the text file, tables, or data structures or by creating new files, tables, or data structures. The tracking analysis functionality 514 may include velocity functionality 516 that can determine instantaneous velocity information for each detected object. The instantaneous velocity may be determined based on a Euclidean distance between the object's center in the current frame and the same object's center in the previous frame. It is possible that an object may temporarily disappear from one or more frames before reappearing. In such cases it may be possible to determine the instantaneous velocity may be determined based on a Euclidean distance between the object's center in the current frame and the same object's center in the last frame the object appeared in. The determined distance can then be divided by the number of frames and the length of each frame. In addition to determining an object's instantaneous velocity, the tracking analysis may further include distance functionality 518 for determining a total distance traveled by the object. Each frame may include a running total of the distance travelled for each detected object, which can be determined by determining the Euclidean distance between the object's center in the current frame and the same object's center in the last frame, or the last frame the object appeared in and then adding the determined distance to the previous frame's accumulated distance. In addition to the velocity functionality 516 and the distance functionality 518, the tracking analysis may also include other information such as the total number of frames an object was detected in, along with other possible information. The results of the tracking analysis may be stored back to the tracking database 512.

In addition to the tracking analysis 514 described above, additional analytics 520 may be performed on the information stored in the database 512. The analytics may include, for example, average velocity functionality 522, region velocity functionality 524, average direction functionality 526, region direction functionality 528, jam detection functionality 530, delivery rate functionality 532, and escapement functionality 534.

The average velocity and direction functionalities may determine an object's average velocity and direction of travel over a number of frames or length of time, such as 15 frames, 30 frames, 60 frames, etc. The region velocity and direction functionalities can determine an object's average velocity/direction through a specified region. The jam functionality can be used to detect a jam or blockage in one or more regions. The delivery rate functionality may determine a number of objects crossing a particular location for a given time. The escapement functionality may determine the rate at which the escapement is functioning at, which may include for example the extend and retract times and the time it takes parts to fully enter the escapement after the escapement returns to the parts loading location, or other similar calculations. It will be apparent that other analysis may be provided.

Some of the analytics functionality may require user input through one or more user interfaces. The one or more user interfaces may be provided be user interface functionality 536 which may include various functionality such as region definition functionality 538 and data overlay 540 functionality. The user interface functionality may present video or images captured by the imaging system 502 to a user and provide various tools for interacting with the images or videos. The region definition functionality 538 allows the user to specify or define one or more regions, lines, or other structures within the images or videos. The data overlay functionality 540 may overlay information determined from one or more sources on the images or frames presented to the user.

Regardless of the specific analysis provided, the results may be stored in the tracking database 512, or may be provided to one or more other processes. For example, the analytics results may be provided to action response functionality 542. The action response functionality 542 may determine one or more actions to take based on the tracking data, results from tracking analysis functionality, and/or analytics functionality. For example, if the delivery rate falls below a threshold, the action response functionality may determine one or more actions to take in order to attempt to increase the delivery rate. Further, if a jam is detected, the action response may stop the associated equipment or provide a notification to users that there is a jam to be cleared. The action response functionality 542 may determine what action to take and may perform those actions automatically. The actions may include controlling one or more components of the automation equipment 504, providing one or more suggested changes to components of the automation equipment to a technician or other software process, providing the action or other data to the user interface functionality 536 for display to a technician, which may be used for example to display information or errors, and/or be provided to other software processes 544.

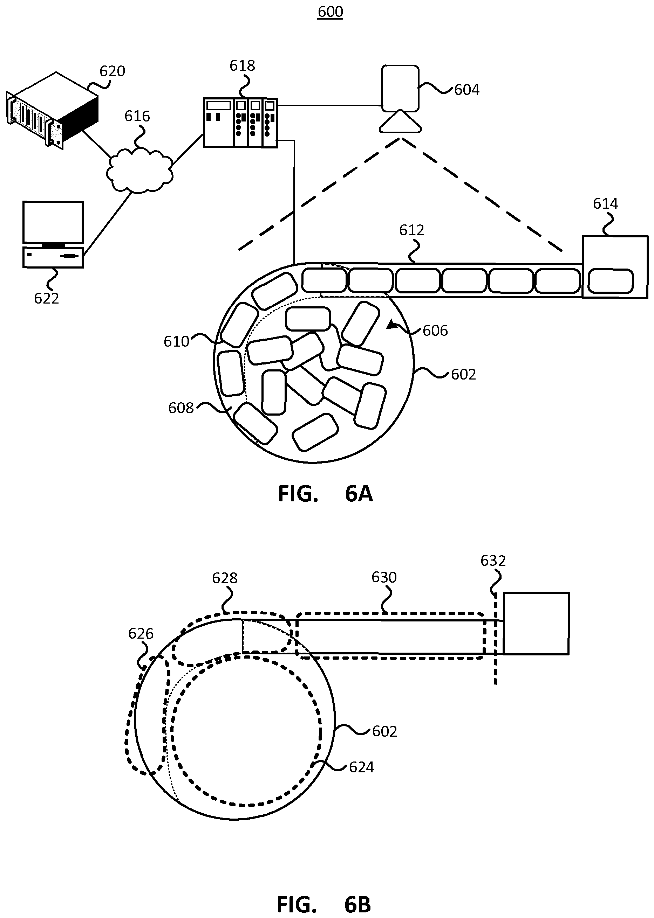

FIGs. 6A, 6B depict an example visions system in use with a bowl feeder. The system 500 was described above with reference to the application of an imaging system to a broad range of automation equipment. The system 600 applies a similar imaging system to a bowl feeder. A bowl feeder 602 can have an imaging system 604 arranged in order to capture images of the bowl, for example above the bowl. The imaging system may also include specialized optical components such as lenses, mirrors and/or structured lighting in order to improve the visibility of the parts in confined spaces typical of a feeder or enhance the contrast of the video frames captured. The bowl is filled with bulk parts 606 arranged in a random orientation. The bowl vibrates which causes parts to move up one or more ramps 608 arranged along the interior wall of the bowl. As depicted, the parts on the ramp 610 generally orient them selves inline with each other before being moved into a parts lane 612. At the end of the parts lane, individual parts are fed into an escapement mechanism 614 which can move the part to a location, for example, the part may be moved to a location or orientation that allows the part to be picked and placed. The components of the bowl feeder, including the imaging system may be controlled by one or more controllers and/or computers communicatively coupled by one or more networks 616. As depicted, the one or more controllers and/or computers may include a programmable logic controller (PLC) 618, one or more servers 620, and one or more computing devices 622. In addition to controlling the bowl feeder, the one or more controllers and/or computers may also provide for the object detection and tracking functionality described above, including the training, deployment and application of a detection model.

As described above, various analysis and analytics can be applied to the output of the trained detection and tracking model applied to the video of the bowl captured by the imaging system. One or more of the analysis may require identifying one or more regions or locations within the bowl feeder. As depicted in FIG. 6B various regions of the bowl feeder system can be defined including, for example a region 624 of the main bowl location 602, a lower region 626 on the ramp, an upper region 628 on the ramp, a region 630 on the parts lane and a crossing point or line 632 before the escapement. These regions or lines can be used to calculate various information. For example, an average number of parts that are present in each region can be determined and used for various purposes. For example, for the bowl reservoir region 624, the number of parts in the region can be used to determine whether the bowl is nearing empty and should be filled. In contrast the number of parts in the lane region 630 may be used to determine if the lane is emptying or filling. Other information for different regions may be determined and used in various ways. The escapement line 632 may be used to determine a rate at which parts cross the line and so are delivered to the escapement. It is possible to calculate other data for regions which may be used for various purposes.

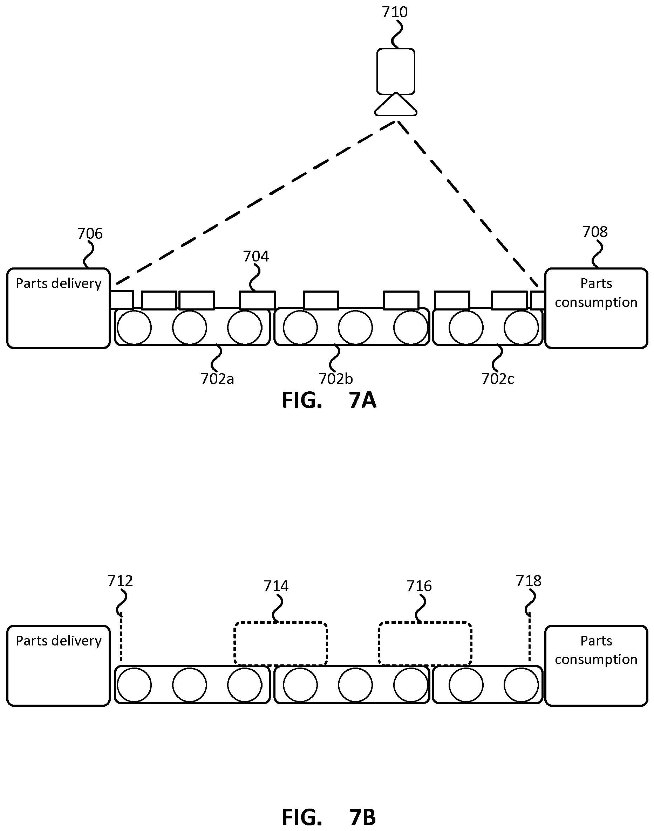

FIGs. 7A, 7B depict an example visions system in use with a conveyor. The system 700 is similar to the bowl feeder system 600 and automation system 500 described above. One or more conveyors 702a, 702b, 702c (referred to as conveyors 702) can be arranged to move parts 704 between a parts delivery location 706 and a parts consumption location 708. The conveyors 702 may have an imaging system 710 arranged in order to capture images of the conveyors 702 and parts 704 moving on them. It is noted that the one or more controllers and/or computers controlling the conveyors and other components are omitted from FIG. 7. The one or more controllers and/or computers (not shown) may also provide for the object detection and tracking functionality described above, including the training, deployment and application of a detection model.

As described above, various analysis and analytics can be applied to the output of the trained detection and tracking model applied to the video of the conveyors captured by the imaging system. One or more of the analysis may require identifying one or more regions or locations within the conveyors. As depicted in FIG. 7B various regions of the bowl feeder system can be defined including, for example a line 712 can be defined close to the parts delivery location, a region 714 can be defined spanning the first and second conveyors 702a, 702b and another region 716 between the second and third conveyors 702b, 702c. Another line 718 can be defined near the parts consumption location 708. Similar to the above, the parts in particular regions, how long parts are in particular regions, the parts crossing the defined lines, and/or the number of parts crossing the lines over a length of time, can be used to calculate various parameters and detect possible problems with the conveyor system. For example, the rate (i.e. number of parts per length of time) of parts crossing line 712 compared to the rate of parts crossing line 714 may be used to determine if a fewer or greater number of parts are being fed onto then conveyor than being consumed, which may indicate if the conveyors are filling or emptying. As a further example, if one or more particular parts are detected in either region 714, 716 for a length of time greater then some threshold, it may be determined that there is a jam or other blockage preventing the parts being successfully moved between the different conveyors.

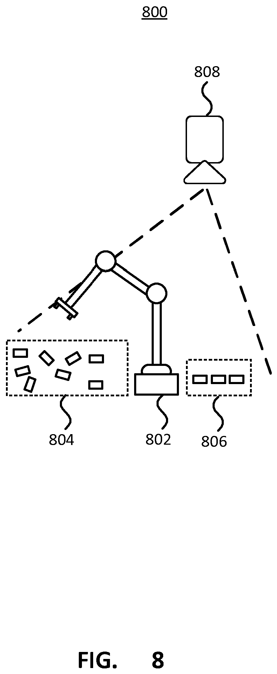

FIG. 8 depict an example visions system in use with a flex feeder. The flex feeder system 800 is similar to those systems described above. The flex feeder system uses a robotic arm 802 with an appropriate gripper to move parts from a picking location 804 to a placing location 806. The parts at the picking location may be in a random orientation as depicted or may be in an ordered orientation and known location. The parts may move on a conveyor or may be placed at the picking location by other means. The parts may be placed at the placing location by the robot in a particular spot and/or orientation. An imaging system 808 may be arranged to monitor functioning of the flex feeder. It is noted that a flex feeder may use its own vision system to identify parts to be picked and to place them at the placing location. The vision system of the flex feeder, or the imaging system 808, may also be used to produce statistics on the number and spatial distribution of **different** orientations of parts, and may provide data input to mechanisms that alter these locations or orientations to improve the overall output of the system As described above, various analysis and analytics can be applied to the output of the trained detection and tracking model applied to the video of the conveyors captured by the imaging system. For example, the number of objects as well as the particular objects, in the picking location 804 can be determined, either at specific times or over time periods. Similarly, the number of objects as well as the particular objects, in the placing location 806 can be determined, either at specific times or over time periods. This information may be used to determined various parameters of status of the flex feeding system. For example, the pick and place rate may be determined based on the number of parts moved from the picking location to the placing location. While this information may be available, or could be determined from other systems, for example, a system controlling the robotic arm could determine the parts delivery rate. However, such systems, including the flex feed system 800, conveyor system 700, bowl feeder system 600, and automation system 500, may be closed systems that do not provide the data to external components, or are otherwise difficult to interoperate with other systems. Accordingly, it can be beneficial to have different ways to calculate the same or similar parameters.

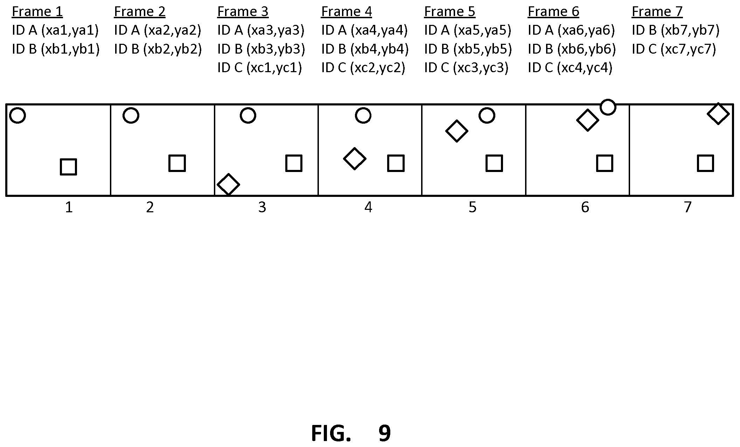

FIG. 9 depicts illustrative tracking data of a plurality of frames of video. As depicted, a number of frames 1..7 of a video clip capture a plurality of different objects. Three different objects are depicted as a circle, square, and diamond. It is noted that the area captured in each of the frames 1..7 is the same physical area. In addition to the video clip, FIG. 9 also depicts the detection information associated with each frame. For example, in frame 1 object A is detected with its center at $(xa1,ya1)$ and object B is detected with its center at $(xb1, yb1)$. In frame 2, the same two objects are detected with object A detected at $(xa2, ya2)$ and object B detected at $(xb2, yb2)$. The detection information may be stored in various formats. One example is a simple text file with each line of the text file specifying the detection data for an object in a frame. An illustrative text file is specified below.

```
#Tracking data for video clip 1
#frame no., object ID, x, y
1,A,xa1,ya1
1,B,xb1,yb1
2,A,xa2,ya2
2,B,xb2,yb2
3,A,xa3,ya3
3,B,xb3,yb3
3,C,xc3,yc3
4,A,xa4,ya4
4,B,xb4,yb4
4,C,xc4,yc4
4,A,xa4,ya4
4,B,xb4,yb4
4,C,xc4,yc4
5,A,xa5,ya5
5,B,xb5,yb5
5,C,xc5,yc5
6,A,xa6,ya6
6,B,xb6,yb6
6,C,xc6,yc6
7,B,xb7,yb7
7,C,xc7,yc7
```

From the above illustrative text file, it can be seen that video clip #1 is 7 frames long. It ill be appreciated that this would be a particularly short video clip and clip lengths of from 30 frames to more than 1000 frames or above are possible. Similarly a relatively small number of objects are detected in each frame. 0 or more objects may be detected in a frame and the number of objects may be dependent upon the number of objects, the size of the space captured by the video, the size of the objects, etc. From the above, it can be seen that object A, namely the circle, is detected in frames 1..6, object B, the square, is detected in frames 1..7 and object C is detected in frames 3..7. It will be appreciated that various information can be determined for the detected objects from the detection information including for example the distance travelled between frames, the distance travelled over a number of frames, the instantaneous velocity between frames, the average velocity over a number of frames, and a direction of movement between two frames.

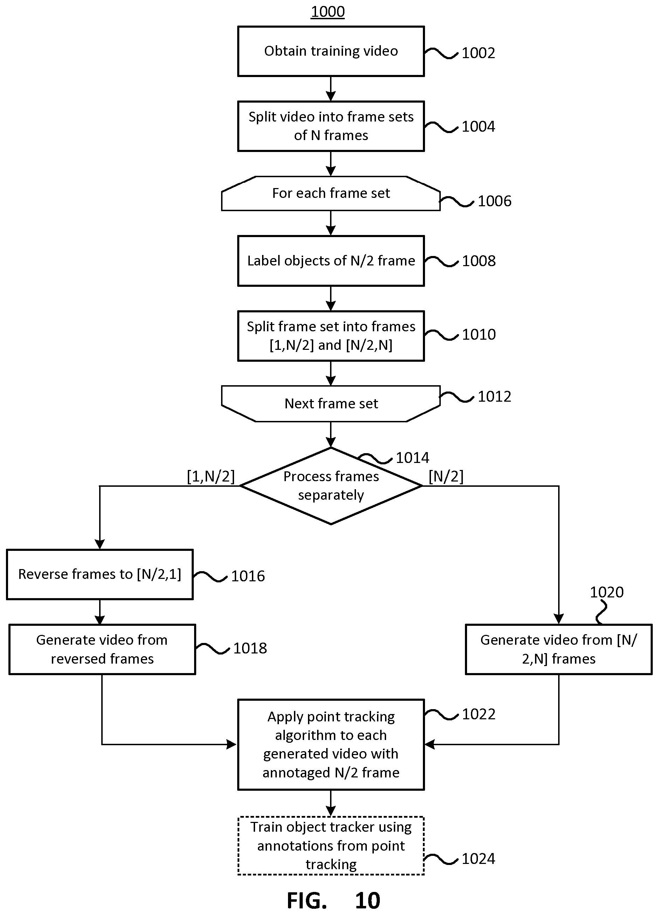

FIG. 10 depicts the automatic annotation of a portion of video. The method 1000 may be applied to a video captured by an imaging system in an automation environment. The method 1000 generates a plurality of annotated frames from the captured video. The annotated frames label objects detected in the frames with a bounding box centered on the object. The method begins with receiving training video (1002). As described above, the annotation process uses a manually labelled image frame and propagates the labelled objects across subsequent frames. It will be appreciated that the objects originally annotated in a frame may be moving through the system and as such may only be present in the training video for a portion of time. As a simple example, in a conveyor system, it may take objects 5 seconds to move from the start of the conveyor to the end of the conveyor. Accordingly, and assuming no blockages or malfunctions, objects that appear at time=0s in the video will not be present in the video at time=5s. As such, the training video may be split into a number of smaller frame sets (1004). Each frame set may have N frames, which may depend on the average length of time an object is expected to be captured in the video among other factors. Each of the frame sets are individually processed (1006). The processing includes labelling the objects of the N/2 frame, or the middle frame, in the frame set (1008). The labelling of the objects may be done manually, for example by an operator in the automation environment, or other individual. The manual labelling of the objects may be done on-site in the automation environment, or at a different location with the N/2 frame being transmitted to an individual for manual labelling. The manual labelling provides an accurate labelling of the objects in the N/2 frame. Once labelled, the frame set is split into the first half of frames, namely frames [1,N/2] and the second half of frames, namely frames [N/2,N] (1010). It is noted that the manually labelled frame N/2 is included in both portions of frames. The next frame set is processed (1012) until all of the frame sets are processed. Although described as processing frame sets serially, they may be processed in parallel.

Once the frame sets are processed to manually annotate a frame, the different frames are processed individually (1014). For frames [1,N/2] ([1,N/2] at 1014), the frames are reversed to frames [N/2,1] (1016). The frames are used to generate a video from the reversed frames (1018). The generated video basically plays the frames backwards starting from the manually labelled frame. Accordingly, the generated video starts with the manually labelled frame. For frames [N/2,N] ([N/2,N] at 1014), a video is generated from frames [N/2,N] (1020). Accordingly, the processing of the N frames results in to videos of N/2 frames with each video starting with the manually annotated frame. Once the videos are generated, the point tracking algorithm is applied to each of the generated videos with the annotated N/2 frame (1022). The point tracking algorithm tracks the annotated labels in the first video frame across all of the other frames of the video. The point tracking algorithm can track the center points of the labels from the manually annotated frame across all frames. Bounding box dimensions from the manually annotated labels can be applied to each of the tracked center points in order to provide bounding boxes on the tracked points in each frame. It is possible to use the frames with these bounding boxes as training input to train or fine tune an object tracker (1024). Additionally or alternatively, the bounding boxes can be resized in order to more accurately fit the objects. The resizing may first apply a segmentation model to frame which may be guided by the tracked bounding boxes. The segmentation mask for each object can then be used to generate a bounding box that more accurately fits the segmentation mask of the object. The resized bounding boxes can be used for training of the object tracker model.

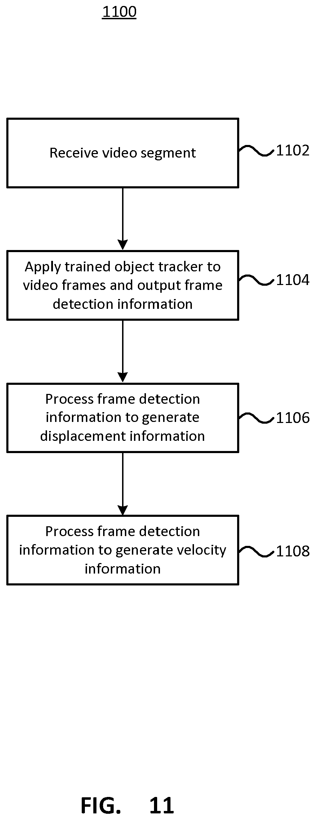

FIG. 11 depicts a method of tracking objects using a trained object tracking model. The method 1100 may be applied video captured in an automation environment for tracking object movements in an automation process. The method begins with receiving a video segment that captures the objects (1102). Once the video is captured a trained object detection/tracking model is applied to the video frames (1104) in order to output detection information. The object detection/tracking model may be trained using a minimum manual annotation of data captured in the automation environment. The trained model outputs the detection information for objects in each frame. The detection information may then be processed to generate displacement information (1106), which can be added to the detection information or provided as separate tracking information. The displacement information may provide an indication of the distance the object has travelled in the video segment. The detection information may also be processed to generate velocity information (1108), which can be added to the detection information or provided as separate tracking information. The velocity information may provide an indication of the instantaneous velocity of objects between frames

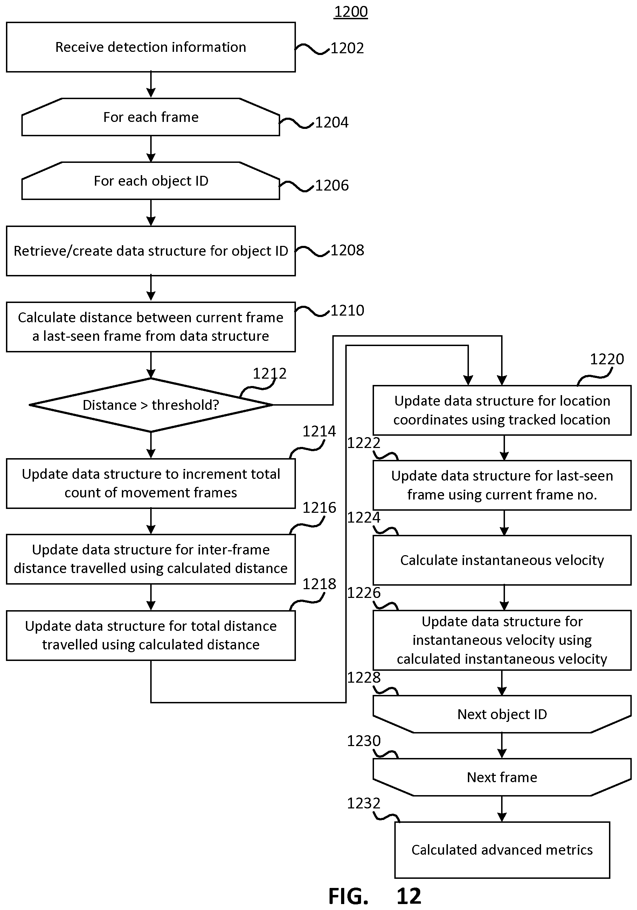

FIG. 12 depicts a method of processing object detection information. The method 1200 processes the detection information output by the trained object detection and tracking model to create data structures for the objects. As described above, detection information specifies the objects detected in each of the frames including at least a location of a point of the object such as the object's center. The method begins with receiving, or retrieving, the detection information (1202). Each frame in the detection information is processed (1204) and each object ID detected in the frame being processed is processed (1206). For each object ID, a data structure is retrieved for the object ID, or if the object ID does not exist in the data structure, it is created (1208). A distance between the object in the current frame and the object in a last-seen frame is calculated from the information in the data structure (1210). It is determined if the distance is greater than a threshold (1212). If the distance is above the threshold (Yes at 1212) that is the object has moved more than the threshold between frames, the data structure is updated to increment a total count of movement frames (1214). The data structure is further updated for the inter-frame distance travelled, for example using the calculated distance (1216). The data structure is further updated for a total distance travelled using the calculated distance (1218). If the distance is below or equal to the threshold (No at 1212), that is the object has moved a limited amount between frames, or after updating the total distance travelled of the data structure, the data structure is updated using the location coordinates from the detection information (1220). The location coordinates from the detection information may be used to determine a center, or approximate center, or other locations such as top, bottom or sides, of the detected object or its bounding boxes. The data structure may be updated for a last-seen frame **using the current frame number being processed (1222). The instantaneous velocity for the object is calculated (1224) and used to updated the data structure (1226). The next object is processed in the same manner (1228) and then subsequent frames are processed (1230). Once the data structure is created and updated it can be used to calculate other advanced metrics (1232).**

**The method 1200 has described updating various fields of a data structure for an object ID. The data structure may be implemented in various ways. One such structure for an object may be, for example:**

Object ID : The ID of the object
Count of Movement Frames : single number indicating the total number of frames where the inter-frame distance is above a threshold
Inter-frame distance travelled : ordered list of comma separated values of distance object travelled from previous last-seen frame
Total distance travelled : single number indicating the total distance the object has travelled
Location coordinates : ordered list of comma separated location coordinates of the object in the frames
Last-Seen Frame : ordered list of comma separated values of frames the object was last seen
Instantaneous velocity : an ordered list of comma separated instantaneous velocities between previous last-seen frames

The above is only an example data structure that may be used to store the object data. It will be appreciated that the same information may be stored in a variety of different structures.

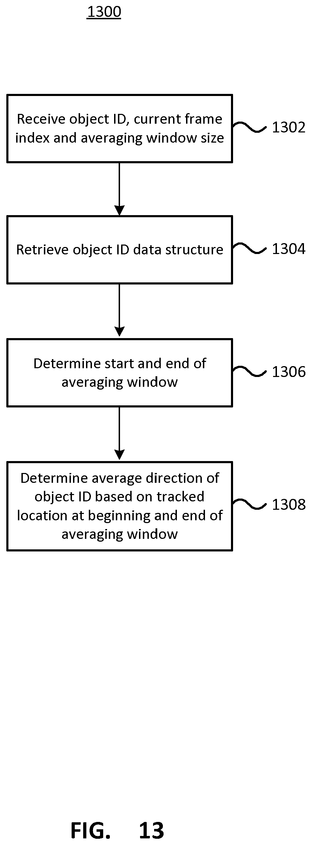

FIG. 13 depicts a method of determining an average direction of an object. The method 1300 may calculate the average direction of an object over a particular averaging window size. An object ID of the object whose direction is to be determined, a current frame index and an averaging window size is received (1302). The averaging window size is the maximum size of averaging window to use for determining the objects average direction of motion. It may be specified in a number of frames, or as a length of time which can be used to determine a number of frames. The received object ID is used to retrieve detection and tracking information (1304), which may be stored in a data structure such as described above. The detection and tracking information for the specified object is used to determine the start and end frames of the averaging window (1306). The start of the averaging window may use the received current frame index. The length of the window may be greater than the number of frames available that the object was in and as such may not simply be determined by subtracting the averaging window size from the current frame index. If the averaging window size is too big, for example if the frame number from subtracting the averaging window size from the current frame index is not in the last-seen frame list of the data structure for the object ID, the end of the window can be determined by making the window size progressively smaller. Once the start and end frames of the averaging window are determined, the average direction of the object can be determined based on the objects location at the start and end frames (1308). The direction may be specified as a angle, $\theta$, which may be determined according to:

$$\theta = atan2(\frac{y2 - y1}{x1 - x2})$$

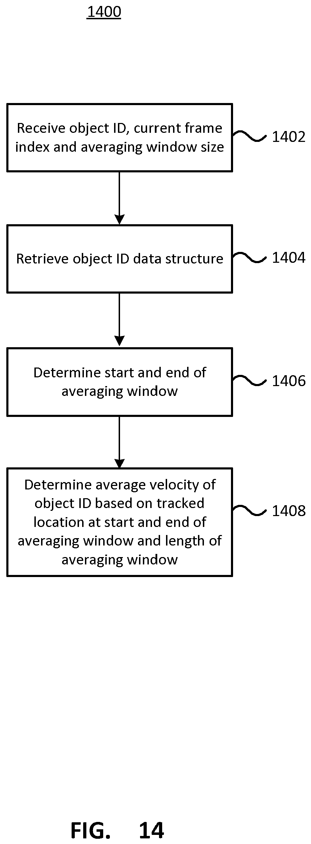

FIG. 14 depicts a method of determining an average velocity of an object. The method 1400 is similar to the method 1300 described above for determining the average direction of an object. An object ID of the object whose average velocity is to be determined, a current frame index and an averaging window size is received (1402). The averaging window size is the maximum size of averaging window to use for determining the objects average velocity. It may be specified in a number of frames, or as a length of time which can be used to determine a number of frames. The received object ID is used to retrieve detection and tracking information (1404), which may be stored in a data structure such as described above. The detection and tracking information for the specified object is used to determine the start and end frames of the averaging window (1406). The start of the averaging window may use the received current frame index. The length of the window may be greater than the number of frames available that the object was in and as such may not simply be determined by subtracting the averaging window size from the current frame index. If the averaging window size is too big, for example if the frame number from subtracting the averaging window size from the current frame index is not in the last-seen frame list of the data structure for the object ID, the end of the window can be determined by making the window size progressively smaller. Once the start and end frames of the averaging window are determined, the average velocity of the object can be determined based on the objects distance moved between the start and end frames, and the length of time between the start and end frames (1408).

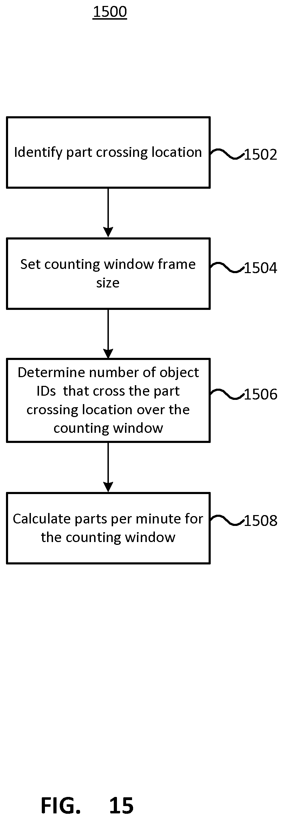

FIG. 15 depicts a method of determining a feed rate of a feed system. The method 1500 may be particularly useful in a feeder bowl, although it is also applicable in other applications. The method begins with identifying a part crossing location(1502). The part crossing location may be specified as a line that cross the path of travel of an object in the videos. A counting-window size is set (1504) which specifies how many frames the parts crossing the line are counted over. The number of object IDs that whose location cross over the part crossing location is determined over number of frames in the counting-size (1506).

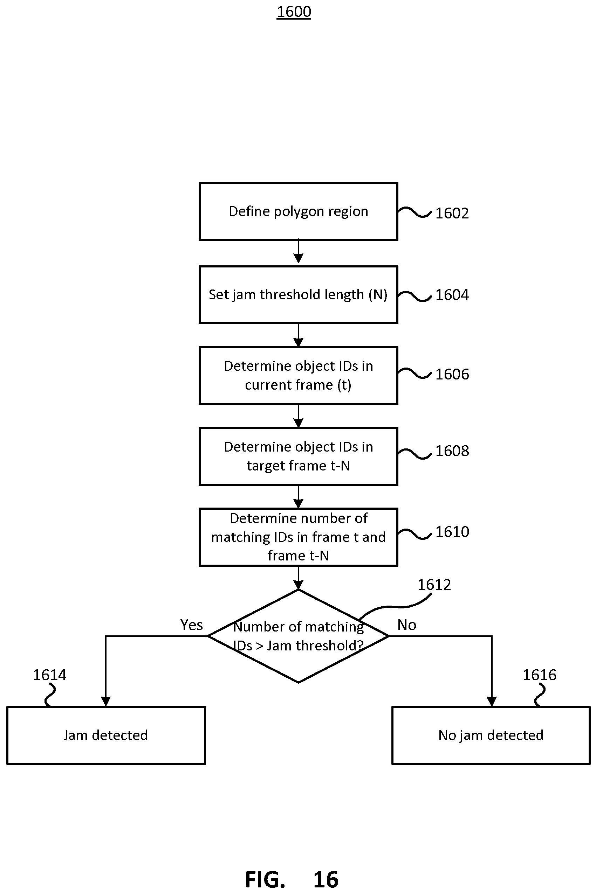

FIG. 16 depicts a method of detecting jams in a feed system. The method 1600 may be used to detect jams or blockages in feed systems such as a bowl feeder. The method 1600 begins with defining a polygon region (1602). The polygon region defines the region in which the jam may be detected. A jam threshold length (N) may be set (1604) which specifies the number of frames a jam is calculated over. The object IDs detected in the current frame (t) are determined (1606). The object IDs in the t-N frame are determined (1608) and a number of matching object IDs in frame t and frame t-N is determined (1610). It is determined if the number of matching object IDs is greater than a jam threshold (1612). If the number is greater than the jam threshold (Yes at 1614) than a jam is detected and an appropriate action can be taken. If the number is not greater than the jam threshold (No at 1614) than no jam is detected (1616).

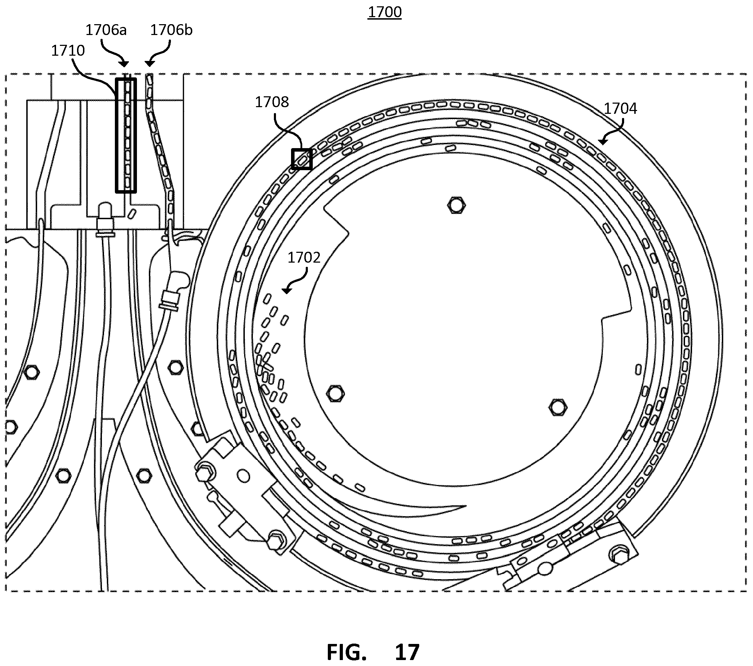

FIG. 17 depicts an example overlay of object information. FIG. 17 depicts an overhead view of a bowl feeder as captured by the imaging system. The view may be a live video stream allowing an operator to view the functioning of the bowl in real time. The information provided by applying the trained object detection and tracking model to the video stream may be presented to the user in various ways. The bowl feeder has a number of parts or objects 1702 in the main bowl of the feeder, the parts 1704 rise up one or more ramps on the interior side of bowl and exit through one or more part lanes, two of which are depicted 1706a, 1706b. In normal operation, all of the parts are moving. Various information may be presented in various ways. For example, an overlay box 1708 may be overlaid a part as it moves through the feeder. The overlay box may display various information such as an average direction of the part, an average velocity etc. Only a single overlay box 1708 is depicted for clarity of the figure however, it will be appreciated that the graphical user interface may overlay multiple, or possibly all, of the parts with various information. Additionally, possible jams, or regions that are operating outside of normal parameters may be highlighted. As depicted, a box 1710 highlighting a possible jam in one of the part lanes can be provided on the graphical user interface when a jam is detected. It will be appreciated that a wide variety of information can be presented in the graphical user interface.

*Definitions*

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It should also be noted that the terms "coupled" or "coupling" as used herein can have several different meanings depending in the context in which these terms are used. For example, the terms coupled or coupling may be used to indicate that an element or device can electrically, optically, or wirelessly send data to another element or device as well as receive data from another element or device. Furthermore, the term "coupled" may indicate that two elements can be directly coupled to one another or coupled to one another through one or more intermediate elements.

It should be noted that terms of degree such as "substantially", "about" and "approximately" as used herein mean a reasonable amount of deviation of the modified term such that the end result is not significantly changed. These terms of degree may also be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

Furthermore, any recitation of numerical ranges by endpoints herein includes all numbers and fractions subsumed within that range (e.g. 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

The example embodiments of the systems and methods described herein may be implemented as a combination of hardware or software. In some cases, the example embodiments described herein may be implemented, at least in part, by using one or more computer programs, executing on one or more programmable devices comprising at least one processing element, and a data storage element (including volatile memory, non-volatile memory, storage elements, or any combination thereof). These devices may also have at least one input device (e.g. a pushbutton keyboard, mouse, a touchscreen, and the like), and at least one output device (e.g. a display screen, a printer, a wireless radio, and the like) depending on the nature of the device. The devices may also have at least one communication device (e.g., a network interface).

It should also be noted that there may be some elements that are used to implement at least part of one of the embodiments described herein that may be implemented via software that is written in a high-level computer programming language such as object oriented programming. Accordingly, the program code may be written in C, C++ or any other suitable programming language and may comprise modules or classes, as is known to those skilled in object oriented programming. Alternatively, or in addition thereto, some of these elements implemented via software may be written in assembly language, machine language or firmware as needed. In either case, the language may be a compiled or interpreted language.

At least some of these software programs may be stored on a storage media (e.g. a computer readable medium such as, but not limited to, ROM, magnetic disk, optical disc) or a device that is readable by a general or special purpose programmable device. The software program code, when read by the programmable device, configures the programmable device to operate in a new, specific and predefined manner in order to perform at least one of the methods described herein.

Furthermore, at least some of the programs associated with the systems and methods of the embodiments described herein may be capable of being distributed in a computer program product comprising a computer readable medium that bears computer usable instructions for one or more processors. The medium may be provided in various forms, including non-transitory forms such as, but not limited to, one or more diskettes, compact disks, tapes, chips, and magnetic and electronic storage.

The present invention has been described here by way of example only, while numerous specific details are set forth herein in order to provide a thorough understanding of the exemplary embodiments described herein. However, it will be understood by those of ordinary skill in the art that these embodiments may, in some cases, be practiced without these specific details. In other instances, well-known methods, procedures and components have not been described in detail so as not to obscure the description of the embodiments. Various modification and variations may be made to these exemplary embodiments without departing from the spirit and scope of the invention, which is limited only by the appended claims.

**Claims**

1. A method of tracking a parts in a video, the method comprising:

    receiving, from at least one image device proximal to a manufacturing device, a sequence of frames of a training video showing a plurality of parts within the manufacturing device;
    receiving an annotated frame from the sequence of frames of the video labelling one or more parts present in the annotated frame;
    generating a plurality of annotated frames using a point propagation algorithm to propagate the labelled one or more parts in the annotated frame across the sequence of frames;
    training an object detection model using the plurality of annotated frames; and
    applying the trained object detection model to a received video showing the plurality of parts within the manufacturing device to detect and track the parts.

2. The method of claim 1, wherein the propagation algorithm is a point track algorithm.

3. The method of claim 1 or 2, wherein the one or more parts in the annotated frame comprise a bounding box.

4. The method of claim 3, wherein generating the plurality of annotated frames comprises resizing the bounding boxes in the plurality of annotated frames.

5. The method of claim 4, wherein resizing the bounding boxes in the plurality of annotated frames comprises segmenting labelled objects, using a segmentation model, in each of the annotated frames and generating bounding boxes based on the segmented labelled objects.

6. The method of claim 5, wherein the segmentation model is a segment anything model (SAM).

7. The method of any one of claims 1 to 6, wherein the video comprises parts moving within a manufacturing device.

8. The method of claim 7, wherein the manufacturing device is a bowl feeder.

9. The method of any one of claims 1 to 8, further comprising determining a velocity of one or more of the parts based on tracking of the parts.

10. The method of claim 9, further comprising generating bowl feeder control settings by applying a flow velocity of the parts to a predictive model.

11. The method of claim 10, further comprising automatically applying the bowl feeder control settings to the bowl feeder.

12. The method of any one of claims 1 to 11, further comprising calculating one or more performance parameters based on the detected and tracked parts.

13. The method of claim 12, wherein the one or more performance parameters are used to determine one or more actions to perform, the one or more actions comprises one or more of:

controlling one or more components of automation equipment;
providing one or more suggested changes to components of the automation equipment;
providing the one or more actions to perform to user interface functionality;
providing the one or performance parameters to perform to user interface functionality;
providing the one or more actions to perform to one or more software processes; and
providing the one or performance parameters to perform to the one or more software processes.

14. A system comprising:

a manufacturing device;
an imaging system capturing images of at least a portion of the manufacturing device; and
at least one controller configured to perform a method according to any one of claims 1 to 13.

15. A non-transitory computer readable medium storing instructions which when executed configure a controller to perform a method according to any one of claims 1 to 13.

**FIG. 1**

Manual Labeled Variable Bounding Box (BBox) Input

Manually Labeled Fixed Bounding Box (BBox) Input

Sequence N Frames

Annotation-Seqence Pair(s)

Persistent Independent Particles (PIPs) with Positional Filter

To Fig. 2B

Trajectories of Points Over N Frame Sequence

FIG.   2A

From
Fig. 2A

Propagated BBox

Segment Anything

Segmentation Masks from BBox

YOLO-v8
Training

To
Fig. 2C

BBox Fitted with SAM

FIG.   2B

Annotated Video Sequence

From Fig. 2B

YOLO Model Inference

Segment

Detect

Remainder of Video Sequence

Segmentation Output

Detection Output

FIG. 2C

EP 4 641 516 A1

FIG.    3A

FIG.    3B

FIG.    3C

FIG. 4A

**FIG. 4B**

**From Fig. 4B** → YOLO Model Inference (424)

426 — Remainder of Video Sequence

428 — Tracking Output → Tracking Text Files

430 — Detection Output → Detection Text Files

432 — Calculations on Inference Output Tracks

434 — Velocity Calculation

436 — Directional tracking

438 — Part Tracking

440 — Jam Detection

Rapid Annotation

Visualization & Processing

**FIG. 4C**

**500**

**FIG. 5**

<u>600</u>

FIG.    6A

FIG.    6B

710

706

Parts delivery

704

702a 702b 702c

708

Parts
consumption

**FIG.   7A**

712

714

716

718

Parts delivery

Parts
consumption

**FIG.   7B**

800

FIG. 8

EP 4 641 516 A1

Frame 1
ID A (xa1,ya1)
ID B (xb1,yb1)

Frame 2
ID A (xa2,ya2)
ID B (xb2,yb2)

Frame 3
ID A (xa3,ya3)
ID B (xb3,yb3)
ID C (xc1,yc1)

Frame 4
ID A (xa4,ya4)
ID B (xb4,yb4)
ID C (xc2,yc2)

Frame 5
ID A (xa5,ya5)
ID B (xb5,yb5)
ID C (xc3,yc3)

Frame 6
ID A (xa6,ya6)
ID B (xb6,yb6)
ID C (xc4,yc4)

Frame 7
ID B (xb7,yb7)
ID C (xc7,yc7)

1  2  3  4  5  6  7

**FIG.   9**

1000

Obtain training video ⟩ 1002

Split video into frame sets
of N frames ⟩ 1004

For each frame set ⟩ 1006

Label objects of N/2 frame ⟩ 1008

Split frame set into frames
[1,N/2] and [N/2,N] ⟩ 1010

Next frame set ⟩ 1012

1014
[1,N/2] ← Process frames
separately → [N/2]

Reverse frames to [N/2,1] ⟩ 1016

Generate video from
reversed frames ⟩ 1018

1020
Generate video from [N/2,N] frames

Apply point tracking
algorithm to each
generated video with
annotaged N/2 frame ⟩ 1022

Train object tracker using
annotations from point
tracking ⟩ 1024

FIG.    10

1100

Receive video segment — 1102

Apply trained object tracker to video frames and output frame detection information — 1104

Process frame detection information to generate displacement information — 1106

Process frame detection information to generate velocity information — 1108

FIG. 11

<u>1200</u>

```
┌─────────────────────────────────┐
│   Receive detection information  │ ～1202
└─────────────────────────────────┘
                 │
                 ▼
┌─────────────────────────────────┐
│         For each frame           │ ～1204
└─────────────────────────────────┘
                 │
                 ▼
┌─────────────────────────────────┐
│        For each object ID        │ ～1206
└─────────────────────────────────┘
                 │
                 ▼
┌─────────────────────────────────┐
│ Retrieve/create data structure   │ ～1208
│        for object ID             │
└─────────────────────────────────┘
                 │
                 ▼
┌─────────────────────────────────┐
│ Calculate distance between        │ ～1210
│ current frame a last-seen frame   │
│ from data structure               │
└─────────────────────────────────┘
                 │
                 ▼
         ◇ Distance > threshold? ◇  1212
                 │
                 ▼
┌─────────────────────────────────┐
│ Update data structure to          │ ～1214
│ increment total count of          │
│ movement frames                   │
└─────────────────────────────────┘
                 │
                 ▼
┌─────────────────────────────────┐
│ Update data structure for inter-  │ ～1216
│ frame distance travelled using    │
│ calculated distance               │
└─────────────────────────────────┘
                 │
                 ▼
┌─────────────────────────────────┐
│ Update data structure for total   │ ～1218
│ distance travelled using          │
│ calculated distance               │
└─────────────────────────────────┘
```

1222

1224

1226

1228

┌─────────────────────────────────┐
│ Update data structure for location │ ～1220
│ coordinates using tracked location │
└─────────────────────────────────┘

┌─────────────────────────────────┐
│ Update data structure for last-seen │
│ frame using current frame no.       │
└─────────────────────────────────┘

┌─────────────────────────────────┐
│ Calculate instantaneous velocity │
└─────────────────────────────────┘

┌─────────────────────────────────┐
│ Update data structure for         │
│ instantaneous velocity using      │
│ calculated instantaneous velocity │
└─────────────────────────────────┘

┌─────────────────────────────────┐
│         Next object ID           │
└─────────────────────────────────┘

1230

┌─────────────────────────────────┐
│          Next frame              │
└─────────────────────────────────┘

1232

┌─────────────────────────────────┐
│   Calculated advanced metrics    │
└─────────────────────────────────┘

# FIG. 12

1300

Receive object ID, current frame
index and averaging window size — 1302

↓

Retrieve object ID data structure — 1304

↓

Determine start and end of
averaging window — 1306

↓

Determine average direction of
object ID based on tracked
location at beginning and end of
averaging window — 1308

**FIG. 13**

1400

Receive object ID, current frame
index and averaging window size — 1402

↓

Retrieve object ID data structure — 1404

↓

Determine start and end of
averaging window — 1406

↓

Determine average velocity of
object ID based on tracked
location at start and end of
averaging window and length of
averaging window — 1408

# FIG.    14

1500

```
┌─────────────────────────────┐
│                             │
│  Identify part crossing location │ ~1502
│                             │
└─────────────────────────────┘
              │
              ▼
┌─────────────────────────────┐
│                             │
│   Set counting window frame  │ ~1504
│             size             │
│                             │
└─────────────────────────────┘
              │
              ▼
┌─────────────────────────────┐
│  Determine number of object  │
│    IDs  that cross the part   │ ~1506
│  crossing location over the   │
│       counting window        │
└─────────────────────────────┘
              │
              ▼
┌─────────────────────────────┐
│  Calculate parts per minute for │ ~1508
│      the counting window      │
└─────────────────────────────┘
```

# FIG.    15

1600

```
┌─────────────────────────┐
│   Define polygon region │  ～1602
└─────────────────────────┘
            │
            ▼
┌─────────────────────────┐
│ Set jam threshold       │  ～1604
│ length (N)              │
└─────────────────────────┘
            │
            ▼
┌─────────────────────────┐
│ Determine object IDs in │  ～1606
│ current frame (t)       │
└─────────────────────────┘
            │
            ▼
┌─────────────────────────┐
│ Determine object IDs in │  ～1608
│ target frame t-N        │
└─────────────────────────┘
            │
            ▼
┌─────────────────────────┐
│ Determine number of     │  ～1610
│ matching IDs in frame t │
│ and frame t-N           │
└─────────────────────────┘
            │
            ▼
                            1612
         ◇ Number of matching ◇
  Yes    ◇ IDs > Jam threshold? ◇   No
```

1614    Jam detected          No jam detected    1616

**FIG.    16**

FIG. 17

EP 4 641 516 A1

Europäisches
Patentamt

European
Patent Office

Office européen
des brevets

# EUROPEAN SEARCH REPORT

**Application Number**

EP 25 17 2564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/151884 A1 (VAJAPEY KIRAN [US] ET AL) 14 May 2020 (2020-05-14) <br> * paragraphs [0003], [0023], [0037], [0041], [0046], [0049], [0074], [0076]; figure 6 * <br> * paragraphs [0092], [0093] * | 1-15 | INV. <br> G06V10/62 <br> G06T7/20 |
| A | Bian Weikang ET AL: "Context-PIPs: Persistent Independent Particles Demands Spatial Context Features", <br> , <br> 6 December 2023 (2023-12-06), pages 1-14, XP093287029, <br> Retrieved from the Internet: <br> URL:https://arxiv.org/pdf/2306.02000 <br> [retrieved on 2025-06-16] <br> * Section 3.1, 3.3; figure 1 * | 1-15 | |
| A | Balaban David ET AL: "Propagating Semantic Labels in Video Data", <br> , <br> 1 October 2023 (2023-10-01), pages 1-7, XP093287028, <br> Retrieved from the Internet: <br> URL:https://arxiv.org/pdf/2310.00783 <br> [retrieved on 2025-06-16] <br> * Section III; figure 1 * | 1-15 | **TECHNICAL FIELDS SEARCHED (IPC)** <br><br> G06V <br> G06T |
| A | US 2024/085887 A1 (KLEINIKKINK STANLEY [CA] ET AL) 14 March 2024 (2024-03-14) <br> * figures 2,3 * | 8-13 | |

The present search report has been drawn up for all claims

| Place of search | Date of completion of the search | Examiner |
|---|---|---|
| The Hague | 20 June 2025 | Meurisse, Wim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 641 516 A1**

## ANNEX TO THE EUROPEAN SEARCH REPORT
## ON EUROPEAN PATENT APPLICATION NO.

EP 25 17 2564

20-06-2025

| Patent document cited in search report | Publication date | Patent family member(s) | | Publication date |
|---|---|---|---|---|
| US 2020151884 A1 | 14-05-2020 | US | 2019347806 A1 | 14-11-2019 |
| | | US | 2020151884 A1 | 14-05-2020 |
| | | WO | 2019217281 A1 | 14-11-2019 |
| US 2024085887 A1 | 14-03-2024 | EP | 4499537 A1 | 05-02-2025 |
| | | US | 2024082975 A1 | 14-03-2024 |
| | | US | 2024085887 A1 | 14-03-2024 |
| | | WO | 2023184034 A1 | 05-10-2023 |

EPO FORM P0459

**REFERENCES CITED IN THE DESCRIPTION**

**Patent documents cited in the description**

- US 63369427